# EUROPEAN PATENT APPLICATION

(11) **EP 4 845 201 A1**
(43) Date of publication of application: **25.11.2026**
(21) Application number: 25751175.8
(22) Date of filing: 21.01.2025
(51) Int. Cl.: H04W 24/02

(54) **COMMUNICATION METHOD AND COMMUNICATION APPARATUS**

(30) Priority: 08.02.2024 CN 202410178276
(71) Applicant: Huawei Technologies Co., Ltd., Shenzhen, Guangdong 518129 (CN)
(72) Inventor: TANG, Zhuqing, Shenzhen, Guangdong 518129 (CN); MA, Zixiang, Shenzhen, Guangdong 518129 (CN); HUANG, Lei, Shenzhen, Guangdong 518129 (CN); DU, Rui, Shenzhen, Guangdong 518129 (CN); HAN, Xiao, Shenzhen, Guangdong 518129 (CN)
(74) Representative: Huawei European IPR
(86) International application number: PCT/CN2025/073522
(87) International publication number: WO 2025/167573

(57) **Abstract**

This application provides a communication method, including: A sensing initiator sends, to a sensing responder, a sensing measurement request frame for requesting to perform sensing measurement; and in a process of the sensing measurement, if the sensing responder moves, the sensing responder sends, to the sensing initiator, first indication information indicating that the sensing responder moves. In this way, the sensing initiator can learn of a mobility status of the sensing responder in time in the process of the sensing measurement. A procedure of the sensing measurement is adapted to a device movement scenario.

## Description

This application claims priority to Chinese Patent Application No. 202410178276.2, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

As a wireless local area network (wireless local area network, WLAN) has developed to date, 802.11, as one of current mainstream wireless access standards, has been widely commercially applied in the past decade. 802.11bf is a next-generation wireless standard of WLAN sensing (WLAN sensing). WLAN sensing means that a device with a WLAN sensing capability determines a feature of a predetermined target (for example, an object, an animal, or a person) based on a received radio signal in a given environment. The feature includes a range, an orientation, a velocity, movement, a behavior, and the like of the target.

Specifically, a sensing measurement procedure includes sensing capabilities exchange, sensing measurement session, sensing measurement exchange, sensing measurement termination, and the like. After these procedures, a sensing initiator may perform a sensing measurement exchange with one or more devices in a negotiated sensing time window, and then require, based on different measurement types, the devices to feed back sensing measurement reports. The current sensing measurement procedure is used in an actual sensing measurement scenario, and a measurement result may be inaccurate due to a change of an actual scenario, for example, a dynamic change of a sensing scenario or an increase in interference.

### SUMMARY

This application provides a communication method, to improve sensing measurement performance.

According to a first aspect, a communication method is provided. The method may be performed by a sensing initiator, or may be performed by a chip, a circuit, or the like in the sensing initiator. This is not limited in this application. For ease of description, descriptions are provided below by using an example in which the method is performed by the sensing initiator.

The communication method includes: The sensing initiator sends a sensing measurement request frame to a sensing responder, where the sensing measurement request frame is used to request to perform sensing measurement; and the sensing initiator receives first indication information from the sensing responder in a process of the sensing measurement, where the first indication information indicates that the sensing responder moves.

According to the foregoing technical solution, in the process of the sensing measurement, if the sensing responder moves, the sensing initiator may be notified by using the first indication information, so that the sensing initiator can learn of a mobility status of the sensing responder in time in the process of the sensing measurement. A procedure of the sensing measurement is adapted to a device movement scenario. With reference to the first aspect, in some implementations of the first aspect, that the sensing initiator receives the first indication information from the sensing responder in the process of the sensing measurement includes: The sensing initiator receives a sensing measurement termination frame from the sensing responder after a first sensing measurement exchange, where the sensing measurement termination frame includes the first indication information; and the first sensing measurement exchange is a sensing measurement exchange included in the process of the sensing measurement.

According to the foregoing technical solution, the sensing responder may send the first indication information on an occasion after a sensing measurement exchange procedure (for example, the first sensing measurement exchange). For example, the sensing responder moves during the first sensing measurement exchange, or the sensing responder moves after the first sensing measurement exchange and before a next sensing measurement exchange of the first sensing measurement exchange. After the first sensing measurement exchange, the sensing responder may send a sensing measurement termination frame, to notify that the current sensing measurement is terminated, and include the first indication information in the sensing measurement termination frame to indicate that a reason for terminating the current measurement is that movement has occurred. In this technical solution, if the sensing responder moves in the process of the sensing measurement, the sensing measurement may be terminated, to avoid inaccurate subsequent sensing measurement caused by movement of the sensing responder.

In addition, when the sensing responder moves, a sensing measurement procedure is terminated by using the sensing measurement termination frame (or a sensing measurement procedure is terminated), which can prevent accumulation of erroneous data and ensure data quality.

In addition, after receiving the sensing measurement termination frame carrying the first indication information, the sensing initiator learns that a specific reason for terminating the sensing measurement procedure is that the device has moved, which helps the sensing initiator consider validity of a sensing measurement report reported by the sensing responder. After receiving the sensing measurement termination frame, the sensing initiator learns, based on the first indication information in the sensing measurement termination frame, that the sensing responder has moved. Therefore, a sensing measurement report received before or after the movement may be no longer valid. When executing a sensing algorithm, the sensing initiator may discard some data, to avoid further processing of erroneous data and reduce unnecessary system processing burden.

Alternatively, after receiving the sensing measurement termination frame carrying the first indication information, the sensing initiator learns that a specific reason for terminating the sensing measurement procedure is that the device has moved, and the sensing initiator may dynamically adjust sensing measurement parameters and policies based on the received reason for terminating the sensing measurement procedure, to adapt to a situation in which the sensing responder moves currently. For example, sensing measurement is not performed with the sensing responder in a short period of time, to improve stability and reliability of subsequent sensing.

Alternatively, after receiving the sensing measurement termination frame carrying the first indication information, the sensing initiator learns that a specific reason for terminating the sensing measurement procedure is that the device has moved, which helps the sensing initiator predict a possibility of a future sensing measurement procedure of the sensing responder. When the sensing initiator performs a sensing exchange with the sensing responder, if the sensing initiator finds that the sensing responder frequently terminates a measurement session due to this reason, the sensing initiator may subsequently not perform sensing measurement with the sensing responder, which helps the sensing initiator to determine whether to initiate sensing measurement subsequently, thereby improving efficiency.

With reference to the first aspect, in some implementations of the first aspect, the method further includes: The sensing initiator receives a first sensing measurement report frame from the sensing responder in a process of the first sensing measurement exchange, where the first sensing measurement report frame includes a first sensing measurement report.

According to the foregoing technical solution, after the first sensing measurement exchange, if the sensing responder sends a sensing measurement termination frame, to notify that the sensing measurement is terminated, the sensing responder may send the first sensing measurement report frame during the first sensing measurement exchange, where the first sensing measurement report frame may include the first sensing measurement report detected during the first sensing measurement exchange. Alternatively, the first sensing measurement report frame may not include a sensing measurement report.

If the first sensing measurement report frame carries the detected first sensing measurement report, the sensing initiator may perform processing based on the fed-back first sensing measurement report, to obtain a sensing measurement result. If the first sensing measurement report frame does not carry the detected first sensing measurement report, because the sensing responder has moved, the first sensing measurement report may be inaccurate, and signaling overheads may be reduced.

With reference to the first aspect, in some implementations of the first aspect, that the sensing initiator receives the first indication information from the sensing responder in the process of the sensing measurement includes: The sensing initiator receives a first sensing measurement report frame from the sensing responder in a process of a first sensing measurement exchange, where the first sensing measurement report frame includes the first indication information; and the first sensing measurement exchange is a sensing measurement exchange included in the process of the sensing measurement.

According to the foregoing technical solution, that the sensing responder sends the first indication information may be: including the first indication information in the first sensing measurement report frame fed back in the process of the first sensing measurement exchange. For example, the sensing responder moves during the first sensing measurement exchange, so that the sensing responder can feed back the first indication information by using the first sensing measurement report frame. The existing sensing measurement report frame is reused to feed back the first indication information, so that backward compatibility of the solution can be improved.

With reference to the first aspect, in some implementations of the first aspect, the first sensing measurement report frame does not include a measurement report. That the first sensing measurement report frame does not include the measurement report may be that an invalid indication (invalid indication) field in the first sensing measurement report frame is set to 1.

According to the foregoing technical solution, if the sensing responder moves during the first sensing measurement exchange, the sensing responder may not need to include the measurement report in the first sensing measurement report frame fed back during the first sensing measurement exchange, and consider, by default, that the measurement report may be inaccurate, thereby reducing signaling overheads.

With reference to the first aspect, in some implementations of the first aspect, that the sensing initiator receives the first indication information from the sensing responder in the process of the sensing measurement includes: The sensing initiator receives a first sensing measurement report frame and a mobility indication frame from the sensing responder in a process of a first sensing measurement exchange, where the mobility indication frame includes the first indication information; and the first sensing measurement exchange is a sensing measurement exchange included in the process of the sensing measurement.

According to the foregoing technical solution, that the sensing responder sends the first indication information may be: including the first indication information in the mobility indication frame fed back in the process of the first sensing measurement exchange. For example, the sensing responder moves during the first sensing measurement exchange, so that the sensing responder can feed back the first indication information by using the mobility indication frame. The first indication information is fed back by using newly added signaling, and an existing signaling format (for example, a frame format of the first sensing measurement report frame) does not need to be modified.

With reference to the first aspect, in some implementations of the first aspect, the first sensing measurement report frame and the mobility indication frame are included in a first frame. For example, the first sensing measurement report frame and the mobility indication frame are aggregated into an A-MPDU for sending to the sensing initiator.

According to the foregoing technical solution, the sensing responder may aggregate together the first sensing measurement report frame and the mobility indication frame that need to be fed back for sending to the sensing initiator, without performing separate transmission, thereby reducing complexity of signaling transmission of the sensing responder. In addition, the sensing responder may directly perform transmission at a transmission opportunity allocated by the sensing initiator, and does not need to obtain a transmission opportunity by contending for a channel additionally. This can effectively reduce a delay and provide a fast feedback, thereby helping the sensing responder know the information more quickly to perform adaptive adjustment.

With reference to the first aspect, in some implementations of the first aspect, the method further includes: The sensing initiator receives a second sensing measurement report frame from the sensing responder in a process of a second sensing measurement exchange, where the second sensing measurement report frame includes a second sensing measurement report; and the second sensing measurement exchange is a sensing measurement exchange included in the process of the sensing measurement, and the first sensing measurement exchange is before the second sensing measurement exchange.

According to the foregoing technical solution, if the sensing responder moves during the first sensing measurement exchange, and notifies the sensing initiator of a mobility status by using the first sensing measurement report frame or the mobility indication frame during the first sensing measurement exchange, the sensing responder may normally perform sensing measurement in a subsequent sensing measurement exchange process.

With reference to the first aspect, in some implementations of the first aspect, the sensing measurement request frame includes second indication information, and the second indication information indicates the sensing responder to feed back mobility indication information when the sensing responder moves.

According to the foregoing technical solution, the sensing initiator may include, in the sensing measurement request frame, the second indication information indicating the sensing responder to feed back mobility indication information when the sensing responder moves, so that the sensing responder can feed back a mobility status in time by using the first indication information when the sensing responder moves. In addition, the second indication information is carried in the sensing measurement request frame, and the sensing initiator may indicate, based on different scenarios, whether mobility feedback is needed, so that a sensing procedure can be more flexible.

With reference to the first aspect, in some implementations of the first aspect, that the sensing measurement request frame includes the second indication information includes at least one of the following: A sensing measurement parameters field in the sensing measurement request frame includes the second indication information; a TB sensing specific subelement in the sensing measurement request frame includes the second indication information; or a non-TB sensing specific subelement in the sensing measurement request frame includes the second indication information.

According to the foregoing technical solution, the sensing measurement request frame may carry the second indication information in a plurality of manners, to improve flexibility of the solution.

With reference to the first aspect, in some implementations of the first aspect, the sensing measurement request frame includes at least one of a first field, a second field, and a third field; and the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

According to the foregoing technical solution, the sensing initiator may include, in the sensing measurement request frame, an indication field (for example, at least one of the first field, the second field, and the third field) indicating a subsequent behavior of the sensing responder when the sensing responder moves, so that the sensing responder can determine a subsequent behavior when the sensing responder moves.

With reference to the first aspect, in some implementations of the first aspect, before the sensing initiator sends the sensing measurement request frame to the sensing responder, the method further includes: The sensing initiator sends a first sensing capabilities element to the sensing responder, where the first sensing capabilities element includes third indication information, and the third indication information indicates whether the sensing initiator has a first capability; and the first capability indicates an algorithm adjustment capability of the sensing initiator.

According to the foregoing technical solution, the sensing initiator may include, in the first sensing capabilities element, the third indication information indicating the algorithm adjustment capability of the sensing initiator, so that the sensing responder can determine a subsequent behavior during movement based on a capability of the sensing initiator. For example, the sensing responder may perform a corresponding procedure after movement based on the first capability of the sensing initiator, to better adapt to a sensing measurement scenario.

With reference to the first aspect, in some implementations of the first aspect, the first capability includes any one of the following: a first algorithm adjustment capability, a second algorithm adjustment capability, or a third algorithm adjustment capability; and the first algorithm adjustment capability is stronger than the second algorithm adjustment capability, and the second algorithm adjustment capability is stronger than the third algorithm adjustment capability.

With reference to the first aspect, in some implementations of the first aspect, before the sensing initiator sends the sensing measurement request frame to the sensing responder, the method further includes: The sensing initiator receives a second sensing capabilities element from the sensing responder, where the second sensing capabilities element includes fourth indication information, and the fourth indication information indicates whether the sensing responder has a second capability; and the second capability includes a capability of feeding back mobility in a sensing measurement report when the sensing responder moves.

According to the foregoing technical solution, the sensing responder may include, in the second sensing capabilities element, an indication of a capability of feeding back mobility in a sensing measurement report when the sensing responder moves, so that the sensing initiator can learn, based on a capability of the sensing responder, a possible subsequent behavior of the sensing responder when the sensing responder subsequently moves. In addition, in a sensing exchange process, if a location of the sensing responder changes, an entire channel changes. In this case, the sensing initiator needs to be able to execute a relatively advanced algorithm to adapt to this scenario. After the sensing responder notifies the sensing initiator of whether the sensing responder has the second capability, the sensing initiator knows that some sensing responders have the second capability. In this case, the sensing initiator may have consideration when performing sensing measurement with the sensing responder, which helps improve sensing measurement performance.

With reference to the first aspect, in some implementations of the first aspect, the second capability includes any one of the following: a capability of not feeding back a sensing measurement report when the sensing responder moves; a capability of feeding back, when the sensing responder moves, a sensing measurement report carrying mobility indication information; or a capability of terminating a measurement session when the sensing responder moves.

With reference to the first aspect, in some implementations of the first aspect, the method further includes: The sensing initiator receives at least one of the following information from the sensing responder: mobility range information of the sensing responder, mobility direction information of the sensing responder, or mobility velocity information of the sensing responder.

According to the foregoing technical solution, the sensing responder may provide more detailed mobility information for the sensing initiator, to assist the sensing initiator in learning of a mobility status of the sensing responder. In addition, the sensing responder reports more mobility information to the sensing initiator, which helps the sensing initiator design a targeted algorithm. The sensing initiator can monitor and record location changes of these devices, so that these changes can be considered during analysis or subsequent measurement initiation.

According to a second aspect, a communication method is provided. The method may be performed by a sensing responder, or may be performed by a chip, a circuit, or the like in the sensing responder. This is not limited in this application. For ease of description, descriptions are provided below by using an example in which the method is performed by the sensing responder.

The communication method includes: The sensing responder receives a sensing measurement request frame from a sensing initiator, where the sensing measurement request frame is used to request to perform sensing measurement; and the sensing responder sends first indication information to the sensing initiator in a process of the sensing measurement, where the first indication information indicates that the sensing responder moves.

With reference to the second aspect, in some implementations of the second aspect, that the sensing responder sends the first indication information to the sensing initiator in the process of the sensing measurement includes: The sensing responder sends a sensing measurement termination frame to the sensing initiator after a first sensing measurement exchange, where the sensing measurement termination frame includes the first indication information; and the first sensing measurement exchange is a sensing measurement exchange included in the process of the sensing measurement.

With reference to the second aspect, in some implementations of the second aspect, the method further includes: The sensing responder sends a first sensing measurement report frame to the sensing initiator in a process of the first sensing measurement exchange, where the first sensing measurement report frame includes a first sensing measurement report.

With reference to the second aspect, in some implementations of the second aspect, that the sensing responder sends the first indication information to the sensing initiator in the process of the sensing measurement includes: The sensing responder sends a first sensing measurement report frame to the sensing initiator in a process of a first sensing measurement exchange, where the first sensing measurement report frame includes the first indication information; and the first sensing measurement exchange is a sensing measurement exchange included in the process of the sensing measurement.

With reference to the second aspect, in some implementations of the second aspect, the first sensing measurement report frame does not include a measurement report.

With reference to the second aspect, in some implementations of the second aspect, that the sensing responder sends the first indication information to the sensing initiator in the process of the sensing measurement includes: The sensing responder sends a first sensing measurement report frame and a mobility indication frame to the sensing initiator in a process of a first sensing measurement exchange, where the mobility indication frame includes the first indication information; and the first sensing measurement exchange is a sensing measurement exchange included in the process of the sensing measurement.

With reference to the second aspect, in some implementations of the second aspect, the method further includes: The sensing responder sends a second sensing measurement report frame to the sensing initiator in a process of a second sensing measurement exchange, where the second sensing measurement report frame includes a second sensing measurement report; and the second sensing measurement exchange is a sensing measurement exchange included in the process of the sensing measurement, and the first sensing measurement exchange is before the second sensing measurement exchange, or the first sensing measurement exchange is after the second sensing measurement exchange.

With reference to the second aspect, in some implementations of the second aspect, the sensing measurement request frame includes second indication information, and the second indication information indicates the sensing responder to feed back mobility indication information when the sensing responder moves.

With reference to the second aspect, in some implementations of the second aspect, that the sensing measurement request frame includes the second indication information includes at least one of the following: A sensing measurement parameters field in the sensing measurement request frame includes the second indication information; a TB sensing specific subelement in the sensing measurement request frame includes the second indication information; or a non-TB sensing specific subelement in the sensing measurement request frame includes the second indication information.

With reference to the second aspect, in some implementations of the second aspect, the sensing measurement request frame includes at least one of a first field, a second field, and a third field; and the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

With reference to the second aspect, in some implementations of the second aspect, before the sensing responder receives the sensing measurement request frame from the sensing initiator, the method further includes: The sensing responder receives a first sensing capabilities element from the sensing initiator, where the first sensing capabilities element includes third indication information, and the third indication information indicates whether the sensing initiator has a first capability; and the first capability indicates an algorithm adjustment capability of the sensing initiator.

With reference to the second aspect, in some implementations of the second aspect, the first capability includes any one of the following: a first algorithm adjustment capability, a second algorithm adjustment capability, or a third algorithm adjustment capability; and the first algorithm adjustment capability is stronger than the second algorithm adjustment capability, and the second algorithm adjustment capability is stronger than the third algorithm adjustment capability.

With reference to the second aspect, in some implementations of the second aspect, if the first capability is the first algorithm adjustment capability, before the sensing responder sends the first indication information to the sensing initiator, the method further includes:
if the sensing responder moves in a process of a first sensing measurement exchange, the sensing responder sends a first sensing measurement report frame to the sensing initiator, where the first sensing measurement report frame includes the first indication information and a first sensing measurement report; or
if the sensing responder moves after a first sensing measurement exchange, the sensing responder sends a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

With reference to the second aspect, in some implementations of the second aspect, if the first capability is the second algorithm adjustment capability, before the sensing responder sends the first indication information to the sensing initiator, the method further includes:
if the sensing responder moves in a process of a first sensing measurement exchange, the sensing responder sends a first sensing measurement report frame to the sensing initiator, where the first sensing measurement report frame includes the first indication information and does not include a first sensing measurement report; or
if the sensing responder moves after a first sensing measurement exchange, the sensing responder sends a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

With reference to the second aspect, in some implementations of the second aspect, if the first capability is the third algorithm adjustment capability, before the sensing responder sends the first indication information to the sensing initiator, the method further includes:
if the sensing responder moves in a process of a first sensing measurement exchange or after the first sensing measurement exchange, the sensing responder sends a first sensing measurement report frame and a sensing measurement termination frame to the sensing initiator, where the sensing measurement termination frame includes the first indication information.

According to the foregoing technical solution, the sensing responder may determine, based on the algorithm adjustment capability of the sensing initiator, a subsequent behavior when the sensing responder moves, for example, which may be terminating a sensing measurement procedure, and including the first indication information in the sensing measurement termination frame; for another example, which may be including the first indication information in the first sensing measurement report frame; for another example, which may be terminating a sensing measurement procedure.

With reference to the second aspect, in some implementations of the second aspect, before the sensing responder receives the sensing measurement request frame from the sensing initiator, the method further includes: The sensing responder sends a second sensing capabilities element to the sensing initiator, where the second sensing capabilities element includes fourth indication information, and the fourth indication information indicates whether the sensing responder has a second capability; and the second capability includes a capability of feeding back mobility in a sensing measurement report when the sensing responder moves.

With reference to the second aspect, in some implementations of the second aspect, the second capability includes any one of the following: a capability of not feeding back a sensing measurement report when the sensing responder moves; a capability of feeding back, when the sensing responder moves, a sensing measurement report carrying mobility indication information; or a capability of terminating a measurement session when the sensing responder moves.

With reference to the second aspect, in some implementations of the second aspect, the method further includes: The sensing responder sends at least one of the following information to the sensing initiator: mobility range information of the sensing responder, mobility direction information of the sensing responder, or mobility velocity information of the sensing responder.

For technical effects of the method shown in the second aspect and the possible designs of the second aspect, refer to the technical effects in the first aspect and the possible designs of the first aspect.

According to a third aspect, a communication method is provided. The method may be performed by a sensing initiator, or may be performed by a chip, a circuit, or the like in the sensing initiator. This is not limited in this application. For ease of description, descriptions are provided below by using an example in which the method is performed by the sensing initiator.

The communication method includes: The sensing initiator sends a first sensing capabilities element to a sensing responder, where the first sensing capabilities element includes third indication information, the third indication information indicates whether the sensing initiator has a first capability, and the first capability indicates an algorithm adjustment capability of the sensing initiator; and the sensing initiator receives a second sensing capabilities element from the sensing responder, where the second sensing capabilities element includes fourth indication information, the fourth indication information indicates whether the sensing responder has a second capability, and the second capability includes a capability of feeding back mobility in a sensing measurement report when the sensing responder moves.

According to the foregoing technical solution, the sensing responder and the sensing initiator may notify each other of respective capabilities in the sensing measurement capabilities exchange phase. Specifically, the sensing responder notifies the sensing initiator of a capability of feeding back mobility in a sensing measurement report when the sensing responder moves, so that the sensing initiator learns of a capability of the sensing responder in a mobility status. A procedure of the sensing measurement is adapted to a device movement scenario. The sensing responder may perform a corresponding procedure after movement based on the first capability of the sensing initiator, to better adapt to a sensing measurement scenario, and the sensing initiator knows that some sensing responders have the second capability. In this case, the sensing initiator may have consideration when performing sensing measurement with the sensing responder, which helps improve sensing measurement performance.

With reference to the third aspect, in some implementations of the third aspect, the first capability includes any one of the following: a first algorithm adjustment capability, a second algorithm adjustment capability, or a third algorithm adjustment capability; and the first algorithm adjustment capability is stronger than the second algorithm adjustment capability, and the second algorithm adjustment capability is stronger than the third algorithm adjustment capability.

With reference to the third aspect, in some implementations of the third aspect, the second capability includes any one of the following: a capability of not feeding back a sensing measurement report when the sensing responder moves; a capability of feeding back, when the sensing responder moves, a sensing measurement report carrying mobility indication information; or a capability of terminating a measurement session when the sensing responder moves.

With reference to the third aspect, in some implementations of the third aspect, the method further includes: The sensing initiator sends a sensing measurement request frame to a sensing responder, where the sensing measurement request frame is used to request to perform sensing measurement; and the sensing initiator receives first indication information from the sensing responder in a process of the sensing measurement, where the first indication information indicates that the sensing responder moves.

According to the foregoing technical solution, in the process of the sensing measurement, if the sensing responder moves, the sensing initiator may be notified by using the first indication information, so that the sensing initiator can learn of a mobility status of the sensing responder in time in the process of the sensing measurement.

With reference to the third aspect, in some implementations of the third aspect, that the sensing initiator receives the first indication information from the sensing responder in the process of the sensing measurement includes: The sensing initiator receives a sensing measurement termination frame from the sensing responder after a first sensing measurement exchange, where the sensing measurement termination frame includes the first indication information; and the first sensing measurement exchange is a sensing measurement exchange included in the process of the sensing measurement.

According to the foregoing technical solution, the sensing responder may send the first indication information on an occasion after a sensing measurement exchange procedure (for example, the first sensing measurement exchange). For example, the sensing responder moves during the first sensing measurement exchange, or the sensing responder moves after the first sensing measurement exchange and before a next sensing measurement exchange of the first sensing measurement exchange. After the first sensing measurement exchange, the sensing responder may send a sensing measurement termination frame, to notify that the current sensing measurement is terminated, and include the first indication information in the sensing measurement termination frame to indicate that a reason for terminating the current measurement is that movement has occurred. In this technical solution, if the sensing responder moves in the process of the sensing measurement, the sensing measurement may be terminated, to avoid inaccurate subsequent sensing measurement caused by movement of the sensing responder.

In addition, when the sensing responder moves, a sensing measurement procedure is terminated by using the sensing measurement termination frame (or a sensing measurement procedure is terminated), which can prevent accumulation of erroneous data and ensure data quality.

In addition, after receiving the sensing measurement termination frame carrying the first indication information, the sensing initiator learns that a specific reason for terminating the sensing measurement procedure is that the device has moved, which helps the sensing initiator consider validity of a sensing measurement report reported by the sensing responder. After receiving the sensing measurement termination frame, the sensing initiator learns, based on the first indication information in the sensing measurement termination frame, that the sensing responder has moved. Therefore, a sensing measurement report received before or after the movement may be no longer valid. When executing a sensing algorithm, the sensing initiator may discard some data, to avoid further processing of erroneous data and reduce unnecessary system processing burden.

Alternatively, after receiving the sensing measurement termination frame carrying the first indication information, the sensing initiator learns that a specific reason for terminating the sensing measurement procedure is that the device has moved, and the sensing initiator may dynamically adjust sensing measurement parameters and policies based on the received reason for terminating the sensing measurement procedure, to adapt to a situation in which the sensing responder moves currently. For example, sensing measurement is not performed with the sensing responder in a short period of time, to improve stability and reliability of subsequent sensing.

Alternatively, after receiving the sensing measurement termination frame carrying the first indication information, the sensing initiator learns that a specific reason for terminating the sensing measurement procedure is that the device has moved, which helps the sensing initiator predict a possibility of a future sensing measurement procedure of the sensing responder. When the sensing initiator performs a sensing exchange with the sensing responder, if the sensing initiator finds that the sensing responder frequently terminates a measurement session due to this reason, the sensing initiator may subsequently not perform sensing measurement with the sensing responder, which helps the sensing initiator to determine whether to initiate sensing measurement subsequently, thereby improving efficiency.

With reference to the third aspect, in some implementations of the third aspect, the method further includes: The sensing initiator receives a first sensing measurement report frame from the sensing responder in a process of the first sensing measurement exchange, where the first sensing measurement report frame includes a first sensing measurement report.

According to the foregoing technical solution, after the first sensing measurement exchange, if the sensing responder sends a sensing measurement termination frame, to notify that the sensing measurement is terminated, the sensing responder may send the first sensing measurement report frame during the first sensing measurement exchange, where the first sensing measurement report frame may include the first sensing measurement report detected during the first sensing measurement exchange. Alternatively, the first sensing measurement report frame may not include a sensing measurement report.

If the first sensing measurement report frame carries the detected first sensing measurement report, the sensing initiator may perform processing based on the fed-back first sensing measurement report, to obtain a sensing measurement result. If the first sensing measurement report frame does not carry the detected first sensing measurement report, because the sensing responder has moved, the first sensing measurement report may be inaccurate, and signaling overheads may be reduced.

With reference to the third aspect, in some implementations of the third aspect, that the sensing initiator receives the first indication information from the sensing responder in the process of the sensing measurement includes: The sensing initiator receives a first sensing measurement report frame from the sensing responder in a process of a first sensing measurement exchange, where the first sensing measurement report frame includes the first indication information; and the first sensing measurement exchange is a sensing measurement exchange included in the process of the sensing measurement.

According to the foregoing technical solution, that the sensing responder sends the first indication information may be: including the first indication information in the first sensing measurement report frame fed back in the process of the first sensing measurement exchange. For example, the sensing responder moves during the first sensing measurement exchange, so that the sensing responder can feed back the first indication information by using the first sensing measurement report frame. The existing sensing measurement report frame is reused to feed back the first indication information, so that backward compatibility of the solution can be improved.

With reference to the third aspect, in some implementations of the third aspect, the first sensing measurement report frame does not include a measurement report. That the first sensing measurement report frame does not include the measurement report may be that an invalid indication (invalid indication) field in the first sensing measurement report frame is set to 1.

According to the foregoing technical solution, if the sensing responder moves during the first sensing measurement exchange, the sensing responder may not need to include the measurement report in the first sensing measurement report frame fed back during the first sensing measurement exchange, and consider, by default, that the measurement report may be inaccurate, thereby reducing signaling overheads.

With reference to the third aspect, in some implementations of the third aspect, that the sensing initiator receives the first indication information from the sensing responder in the process of the sensing measurement includes: The sensing initiator receives a first sensing measurement report frame and a mobility indication frame from the sensing responder in a process of a first sensing measurement exchange, where the mobility indication frame includes the first indication information; and the first sensing measurement exchange is a sensing measurement exchange included in the process of the sensing measurement.

According to the foregoing technical solution, that the sensing responder sends the first indication information may be: including the first indication information in the mobility indication frame fed back in the process of the first sensing measurement exchange. For example, the sensing responder moves during the first sensing measurement exchange, so that the sensing responder can feed back the first indication information by using the mobility indication frame. The first indication information is fed back by using newly added signaling, and an existing signaling format (for example, a frame format of the first sensing measurement report frame) does not need to be modified.

With reference to the third aspect, in some implementations of the third aspect, the first sensing measurement report frame and the mobility indication frame are included in a first frame. For example, the first sensing measurement report frame and the mobility indication frame are aggregated into an A-MPDU for sending to the sensing initiator.

According to the foregoing technical solution, the sensing responder may aggregate together the first sensing measurement report frame and the mobility indication frame that need to be fed back for sending to the sensing initiator, without performing separate transmission, thereby reducing complexity of signaling transmission of the sensing responder. In addition, the sensing responder may directly perform transmission at a transmission opportunity allocated by the sensing initiator, and does not need to obtain a transmission opportunity by contending for a channel additionally. This can effectively reduce a delay and provide a fast feedback, thereby helping the sensing responder know the information more quickly to perform adaptive adjustment.

With reference to the third aspect, in some implementations of the third aspect, the method further includes: The sensing initiator receives a second sensing measurement report frame from the sensing responder in a process of a second sensing measurement exchange, where the second sensing measurement report frame includes a second sensing measurement report; and the second sensing measurement exchange is a sensing measurement exchange included in the process of the sensing measurement, and the first sensing measurement exchange is before the second sensing measurement exchange.

According to the foregoing technical solution, if the sensing responder moves during the first sensing measurement exchange, and notifies the sensing initiator of a mobility status by using the first sensing measurement report frame or the mobility indication frame during the first sensing measurement exchange, the sensing responder may normally perform sensing measurement in a subsequent sensing measurement exchange process.

With reference to the third aspect, in some implementations of the third aspect, the sensing measurement request frame includes second indication information, and the second indication information indicates the sensing responder to feed back mobility indication information when the sensing responder moves.

According to the foregoing technical solution, the sensing initiator may include, in the sensing measurement request frame, the second indication information indicating the sensing responder to feed back mobility indication information when the sensing responder moves, so that the sensing responder can feed back a mobility status in time by using the first indication information when the sensing responder moves. In addition, the second indication information is carried in the sensing measurement request frame, and the sensing initiator may indicate, based on different scenarios, whether mobility feedback is needed, so that a sensing procedure can be more flexible.

With reference to the third aspect, in some implementations of the third aspect, that the sensing measurement request frame includes the second indication information includes at least one of the following: A sensing measurement parameters field in the sensing measurement request frame includes the second indication information; a TB sensing specific subelement in the sensing measurement request frame includes the second indication information; or a non-TB sensing specific subelement in the sensing measurement request frame includes the second indication information.

According to the foregoing technical solution, the sensing measurement request frame may carry the second indication information in a plurality of manners, to improve flexibility of the solution.

With reference to the third aspect, in some implementations of the third aspect, the sensing measurement request frame includes at least one of a first field, a second field, and a third field; and the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

According to the foregoing technical solution, the sensing initiator may include, in the sensing measurement request frame, an indication field (for example, at least one of the first field, the second field, and the third field) indicating a subsequent behavior of the sensing responder when the sensing responder moves, so that the sensing responder can determine a subsequent behavior when the sensing responder moves.

With reference to the third aspect, in some implementations of the third aspect, the method further includes: The sensing initiator receives at least one of the following information from the sensing responder: mobility range information of the sensing responder, mobility direction information of the sensing responder, or mobility velocity information of the sensing responder.

According to the foregoing technical solution, the sensing responder may provide more detailed mobility information for the sensing initiator, to assist the sensing initiator in learning of a mobility status of the sensing responder. In addition, the sensing responder reports more mobility information to the sensing initiator, which helps the sensing initiator design a targeted algorithm. The sensing initiator can monitor and record location changes of these devices, so that these changes can be considered during analysis or subsequent measurement initiation.

According to a fourth aspect, a communication method is provided. The method may be performed by a sensing responder, or may be performed by a chip, a circuit, or the like in the sensing responder. This is not limited in this application. For ease of description, descriptions are provided below by using an example in which the method is performed by the sensing responder.

The communication method includes: The sensing responder receives a first sensing capabilities element from a sensing initiator, where the first sensing capabilities element includes third indication information, the third indication information indicates whether the sensing initiator has a first capability, and the first capability indicates an algorithm adjustment capability of the sensing initiator; and the sensing responder sends a second sensing capabilities element to the sensing initiator, where the second sensing capabilities element includes fourth indication information, the fourth indication information indicates whether the sensing responder has a second capability, and the second capability includes a capability of feeding back mobility in a sensing measurement report when the sensing responder moves.

With reference to the fourth aspect, in some implementations of the fourth aspect, the first capability includes any one of the following: a first algorithm adjustment capability, a second algorithm adjustment capability, or a third algorithm adjustment capability; and the first algorithm adjustment capability is stronger than the second algorithm adjustment capability, and the second algorithm adjustment capability is stronger than the third algorithm adjustment capability.

With reference to the fourth aspect, in some implementations of the fourth aspect, if the first capability is the first algorithm adjustment capability, before the sensing responder sends the first indication information to the sensing initiator, the method further includes:
if the sensing responder moves in a process of a first sensing measurement exchange, the sensing responder sends a first sensing measurement report frame to the sensing initiator, where the first sensing measurement report frame includes the first indication information and a first sensing measurement report; or
if the sensing responder moves after a first sensing measurement exchange, the sensing responder sends a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

With reference to the fourth aspect, in some implementations of the fourth aspect, if the first capability is the second algorithm adjustment capability, before the sensing responder sends the first indication information to the sensing initiator, the method further includes:
if the sensing responder moves in a process of a first sensing measurement exchange, the sensing responder sends a first sensing measurement report frame to the sensing initiator, where the first sensing measurement report frame includes the first indication information and does not include a first sensing measurement report; or
if the sensing responder determines that the sensing responder moves after a first sensing measurement exchange, the sensing responder sends a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

With reference to the fourth aspect, in some implementations of the fourth aspect, if the first capability is the third algorithm adjustment capability, before the sensing responder sends the first indication information to the sensing initiator, the method further includes:
if the sensing responder moves in a process of a first sensing measurement exchange or after the first sensing measurement exchange, the sensing responder sends a first sensing measurement report frame and a sensing measurement termination frame to the sensing initiator, where the sensing measurement termination frame includes the first indication information.

With reference to the fourth aspect, in some implementations of the fourth aspect, the second capability includes any one of the following: a capability of not feeding back a sensing measurement report when the sensing responder moves; a capability of feeding back, when the sensing responder moves, a sensing measurement report carrying mobility indication information; or a capability of terminating a measurement session when the sensing responder moves.

With reference to the fourth aspect, in some implementations of the fourth aspect, the sensing responder receives a sensing measurement request frame from the sensing initiator, where the sensing measurement request frame is used to request to perform sensing measurement; and the sensing responder sends first indication information to the sensing initiator in a process of the sensing measurement, where the first indication information indicates that the sensing responder moves.

With reference to the fourth aspect, in some implementations of the fourth aspect, that the sensing responder sends the first indication information to the sensing initiator in the process of the sensing measurement includes: The sensing responder sends a sensing measurement termination frame to the sensing initiator after a first sensing measurement exchange, where the sensing measurement termination frame includes the first indication information; and the first sensing measurement exchange is a sensing measurement exchange included in the process of the sensing measurement.

With reference to the fourth aspect, in some implementations of the fourth aspect, the method further includes: The sensing responder sends a first sensing measurement report frame to the sensing initiator in a process of the first sensing measurement exchange, where the first sensing measurement report frame includes a first sensing measurement report.

With reference to the fourth aspect, in some implementations of the fourth aspect, that the sensing responder sends the first indication information to the sensing initiator in the process of the sensing measurement includes: The sensing responder sends a first sensing measurement report frame to the sensing initiator in a process of a first sensing measurement exchange, where the first sensing measurement report frame includes the first indication information; and the first sensing measurement exchange is a sensing measurement exchange included in the process of the sensing measurement.

With reference to the fourth aspect, in some implementations of the fourth aspect, the first sensing measurement report frame does not include a measurement report.

With reference to the fourth aspect, in some implementations of the fourth aspect, that the sensing responder sends the first indication information to the sensing initiator in the process of the sensing measurement includes: The sensing responder sends a first sensing measurement report frame and a mobility indication frame to the sensing initiator in a process of a first sensing measurement exchange, where the mobility indication frame includes the first indication information; and the first sensing measurement exchange is a sensing measurement exchange included in the process of the sensing measurement.

With reference to the fourth aspect, in some implementations of the fourth aspect, the method further includes: The sensing responder sends a second sensing measurement report frame to the sensing initiator in a process of a second sensing measurement exchange, where the second sensing measurement report frame includes a second sensing measurement report; and the second sensing measurement exchange is a sensing measurement exchange included in the process of the sensing measurement, and the first sensing measurement exchange is before the second sensing measurement exchange, or the first sensing measurement exchange is after the second sensing measurement exchange.

With reference to the fourth aspect, in some implementations of the fourth aspect, the sensing measurement request frame includes second indication information, and the second indication information indicates the sensing responder to feed back mobility indication information when the sensing responder moves.

With reference to the fourth aspect, in some implementations of the fourth aspect, that the sensing measurement request frame includes the second indication information includes at least one of the following: A sensing measurement parameters field in the sensing measurement request frame includes the second indication information; a TB sensing specific subelement in the sensing measurement request frame includes the second indication information; or a non-TB sensing specific subelement in the sensing measurement request frame includes the second indication information.

With reference to the fourth aspect, in some implementations of the fourth aspect, the sensing measurement request frame includes at least one of a first field, a second field, and a third field; and the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

With reference to the fourth aspect, in some implementations of the fourth aspect, the method further includes: The sensing responder sends at least one of the following information to the sensing initiator: mobility range information of the sensing responder, mobility direction information of the sensing responder, or mobility velocity information of the sensing responder.

For technical effects of the method shown in the fourth aspect and the possible designs of the fourth aspect, refer to the technical effects in the third aspect and the possible designs of the third aspect.

According to a fifth aspect, a communication apparatus is provided. The communication apparatus is configured to perform any one of the first aspect or the third aspect and the implementations of the first aspect or the third aspect. Specifically, the communication apparatus includes a processor and a memory. The memory is configured to store a computer program. The processor is configured to: invoke the computer program from the memory and run the computer program, so that the communication apparatus performs any one of the first aspect or the third aspect and the implementations of the first aspect or the third aspect.

In an implementation, the communication apparatus is a sensing initiator, a transceiver unit may be a transceiver or an input/output interface, and a processing unit may be at least one processor. In a possible implementation, the transceiver may be a transceiver circuit. In a possible implementation, the input/output interface may be an input/output circuit.

In another implementation, the communication apparatus may be a chip, a chip system, or a circuit in the sensing initiator. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The communication apparatus is configured to perform any one of the second aspect or the fourth aspect and the implementations of the second aspect or the fourth aspect. Specifically, the communication apparatus includes a processor and a memory. The memory is configured to store a computer program. The processor is configured to: invoke the computer program from the memory and run the computer program, so that the communication apparatus performs any one of the second aspect or the fourth aspect and the implementations of the second aspect or the fourth aspect.

In an implementation, the communication apparatus is a sensing responder, a transceiver unit may be a transceiver or an input/output interface, and a processing unit may be at least one processor. In a possible implementation, the transceiver may be a transceiver circuit. In a possible implementation, the input/output interface may be an input/output circuit.

In another implementation, the communication apparatus may be a chip, a chip system, or a circuit in the sensing responder. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a computer-readable storage medium is provided. The computer-readable storage medium stores a computer program, and when the computer program is run, the method according to any one of the implementations of the first aspect to the fourth aspect is performed.

According to an eighth aspect, a computer program product including instructions is provided. When the computer program product is run, the method according to any one of the implementations of the first aspect to the fourth aspect is performed.

According to a ninth aspect, a chip is provided. The chip includes a processor and a communication interface. The processor reads instructions through the communication interface, to perform the method according to any one of the implementations of the first aspect to the fourth aspect.

In an implementation, the chip further includes a memory. The memory stores a computer program or the instructions, the processor is configured to execute the computer program or the instructions stored in the memory, and when the computer program or the instructions are executed, the processor is configured to perform the method according to any one of the implementations of the first aspect to the fourth aspect.

According to a tenth aspect, a communication system is provided, and includes the communication apparatus in the fifth aspect and the communication apparatus in the sixth aspect.

According to an eleventh aspect, a computer program is provided. When the computer program is run, the method according to any one of the implementations of the first aspect to the fourth aspect is performed.

### BRIEF DESCRIPTION OF DRAWINGS

FIG. 1 is a diagram of an application scenario to which an embodiment of this application is applicable;
FIG. 2 is a diagram of a structure of an apparatus according to an embodiment of this application;
FIG. 3 is a diagram of a structure of a sensing capabilities element;
FIG. 4A to FIG. 4C are a diagram of a structure of a sensing measurement request frame;
FIG. 5 shows a trigger-based sensing measurement exchange procedure;
FIG. 6 is a diagram in which one sensing availability window may include a plurality of sensing measurement exchanges;
FIG. 7 is a diagram in which one sensing availability window may include one sensing measurement exchange;
FIG. 8 is a diagram of a TB sensing measurement exchange;
FIG. 9 is a diagram of a non-TB sensing measurement exchange;
FIG. 10 is a diagram of a structure of a sensing measurement report frame;
FIG. 11 is a diagram of a structure of a sensing measurement termination frame;
FIG. 12 is a schematic flowchart of a communication method according to an embodiment of this application;
FIG. 13 is a diagram of a structure of a sensing measurement termination frame according to an embodiment of this application;
FIG. 14A and FIG. 14B are diagrams of a sensing measurement exchange according to an embodiment of this application;
FIG. 15 is a diagram of a structure of a sensing measurement report frame according to an embodiment of this application;
FIG. 16 is a diagram of another sensing measurement exchange according to an embodiment of this application;
FIG. 17 is a diagram of a structure of a mobility indication frame according to an embodiment of this application;
FIG. 18A and FIG. 18B are diagrams of still another sensing measurement exchange according to an embodiment of this application;
FIG. 19 is a diagram of yet another sensing measurement exchange according to an embodiment of this application;
FIG. 20 is a diagram of a structure of a sensing measurement request frame according to an embodiment of this application;
FIG. 21 is a diagram of a structure of another sensing measurement request frame according to an embodiment of this application;
FIG. 22 is a diagram of a structure of still another sensing measurement request frame according to an embodiment of this application;
FIG. 23 is a diagram of a structure of yet another sensing measurement request frame according to an embodiment of this application;
FIG. 24 is a diagram of a structure of another mobility indication frame according to an embodiment of this application;
FIG. 25 is a schematic flowchart of another communication method according to an embodiment of this application;
FIG. 26 is a diagram of a frame structure of a sensing capabilities element according to an embodiment of this application;
FIG. 27 is a diagram of a frame structure of another sensing capabilities element according to an embodiment of this application;
FIG. 28 is a block diagram of a communication apparatus according to an embodiment of this application;
FIG. 29 is a diagram of another communication apparatus according to an embodiment of this application; and
FIG. 30 is a diagram of a chip system according to an embodiment of this application.

### DESCRIPTION OF EMBODIMENTS

For ease of understanding of embodiments of this application, the following several descriptions are provided first.

In this application, "indicating" may include "directly indicating" and "indirectly indicating". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In this application, "at least one" means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not be construed as any limitation on the implementation processes in embodiments of this application. It should be understood that objects described in this way are interchangeable in proper circumstances, so that solutions other than embodiments of this application can be described. In addition, in embodiments of this application, words such as "S1210" are merely identifiers for ease of description, and do not limit a sequence of performing steps.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Fourth, "being stored" in embodiments of this application may be "being stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

In embodiments of this application, a "protocol" may be a standard protocol in the communication field, for example, may include an NR protocol and a related protocol applied to a future communication system. This is not limited in this application.

In embodiments of this application, "of (of)", "corresponding (corresponding, relevant)", "corresponding (corresponding)", and "associate (associate)" may be interchangeably used sometimes. It should be noted that meanings expressed by the terms are consistent when a difference between the terms is not emphasized.

In embodiments of this application, "in a case of", "when", and "if" may be used interchangeably sometimes. It should be noted that expressed meanings are consistent when a difference is not emphasized.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In some of accompanying drawings related to a message structure in embodiments of this application, an example of a length of a field in a message is provided. It should be understood that a length of a byte shown in the accompanying drawings in embodiments of this application is merely an example. In an actual application, a length of any byte may change.

In some of accompanying drawings related to a message structure in embodiments of this application, an example of a name of a field in a message is provided. It should be understood that the name of the field shown in the accompanying drawings in embodiments of this application is merely an example. In an actual application, a name of any field may change.

In some of accompanying drawings related to a message structure in embodiments of this application, a length of a field in a message is 0 or variable (variable), indicating that the field is an optional field. In other words, when the message does not include the field, the length of the field is 0. If the length of the field is variable (variable), it indicates that the length of the field is uncertain. In an actual design process, other indication information may indicate a specific length of the field, or a receiver and a transmitter may negotiate the length of the field in advance, or the length of the field is predefined, or when receiving the message that carries the field, a receiver can determine the length of the field based on other auxiliary information and parse the message. A manner of determining a specific length of a variable-length field is not limited in this application. For details, refer to descriptions of a length of a variable field in an SBP request frame in a current related technology. Details are not described herein again. The following does not repeatedly describe the length of the variable-length field involved in the message.

For a message or a frame in embodiments of this application, a name of the message or a name of the frame is not limited, provided that a corresponding function can be implemented.

The following describes technical solutions of this application with reference to accompanying drawings.

The technical solutions provided in embodiments of this application are applicable to a wireless local area network (wireless local area network, WLAN) scenario, for example, supporting an institute of electrical and electronics engineers (institute of electrical and electronics engineers, IEEE) 802.11-related standard, for example, the 802.11ax standard, the 802.11be standard (Wi-Fi 7), also referred to as an extremely high throughput (extremely high throughput, EHT) standard, the 802.11bn standard (Wi-Fi 8), or a next-generation standard of Wi-Fi 8, and also including 802.11ad, the 802.11ay standard, an integrated millimeter wave (Integrated mmWave, IMMW) protocol, or a sparklink (sparklink/nearlink) protocol, applicable to an ultra wide band (ultra wide band, UWB)-based wireless personal local area network system, for example, 802.15 series standards, and also applicable to a sensing (sensing) system, for example, 802.11bf series standards. The 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known currently or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a 5th generation (5th generation, 5G) system or new radio (new radio, NR), a 6th generation (6th generation, 6G) system, an internet of things (internet of things, IoT) network, or a vehicle-to-everything (vehicle-to-x, V2X).

The foregoing communication systems to which this application is applicable are merely examples for description, and the communication systems to which this application is applicable are not limited thereto. Unified descriptions are provided herein. Details are not described below again.

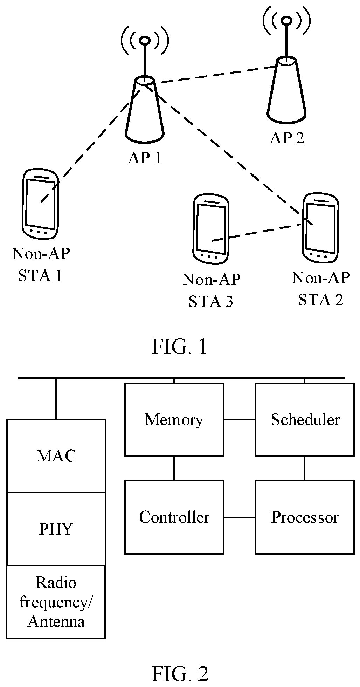

FIG. 1 is a diagram of an application scenario to which an embodiment of this application is applicable. As shown in FIG. 1, a communication method provided in this application is applicable to data communication between an access point (access point, AP) (an AP 1 and an AP 2 shown in FIG. 1) and a station (station, STA) (a non-AP STA 1, a non-AP STA 2, and a non-AP STA 3 shown in FIG. 1). The station may be a non-access point station (non-access point station, non-AP STA), which is referred to as a non-AP station or STA for short, and the AP may be referred to as an access station. Specifically, the solutions of this application are applicable to data communication between an AP and one or more non-AP stations (for example, data communication between the AP 1 and both the non-AP STA 1 and the non-AP STA 2), and are also applicable to data communication between APs (for example, data communication between the AP 1 and the AP 2) and data communication between non-AP STAs (for example, data communication between the non-AP STA 2 and the non-AP STA 3).

The access point may be a node through which a terminal (for example, a mobile phone) accesses a wired (or wireless) network, and is mainly deployed at home, in a building, and on a campus, with a typical coverage radius ranging from tens of meters to hundreds of meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may also support one or more standards of the IEEE 802.11 series, such as 802.11a, 802.11b, 802.11g, 802.11n, 802.11ac, 802.11ax, 802.11be, 802.11ad, and 802.11ay, the IMMW protocol, or the sparklink protocol.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more standards of the IEEE 802.11 series, such as 802.11a, 802.11b, 802.11g, 802.11n, 802.11ac, 802.11ax, 802.11be, 802.11ad, and 802.11ay, the IMMW protocol, or the sparklink protocol.

For example, the non-AP station may be a mobile phone, a tablet computer, a set-top box, a smart television, a smart wearable device, a vehicle-mounted communication device, a computer, an internet of things (internet of things, IoT) node, a sensor, smart home, for example, a smart camera, a smart remote control, a smart water meter, or a smart electricity meter, and a sensor in smart city.

The AP or the non-AP station may include a transmitter, a receiver, a memory, a processor, and the like. The transmitter and the receiver are respectively configured to: send and receive packet structures. The memory is configured to: store signaling information, store a preset value agreed in advance, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows only an example of an apparatus according to this application, and does not constitute a limitation on this application. For example, the apparatus may not include the controller and/or the scheduler.

For ease of understanding of the technical solutions in embodiments of this application, some terms or concepts that may be used in embodiments of this application are first briefly described.
1. Sensing (sensing) technology: A signal sent by a Wi-Fi device is usually received by a terminal device only after being reflected, diffracted, and scattered by various obstacles. Consequently, an actually received signal is usually obtained by superimposing a plurality of paths of signals. In other words, a channel environment may become complex, but this also brings convenience for sensing, through a radio signal, a physical environment through which the radio signal passes. A surrounding environment can be inferred and sensed by analyzing a radio signal, for example, channel state information (channel state information, CSI), affected by the various obstacles. Therefore, a sensing technology is derived accordingly.

The institute of electrical and electronics engineers (institute of electrical and electronics engineers, IEEE) 802.11bf is a next-generation wireless standard for WLAN sensing (WLAN sensing). WLAN sensing means that a device with a WLAN sensing capability determines a feature of a predetermined target (for example, an object, an animal, or a person) based on a received radio signal in a given environment. The feature includes a range, an orientation, a velocity, movement, a behavior, and the like of the target.

The current IEEE 802.11bf standard defines four roles:
- Sensing initiator (sensing initiator): is a device that initiates a sensing behavior.
- Sensing responder (sensing responder): is a device that responds to the sensing behavior initiated by the sensing initiator and participates in the sensing behavior.
- Sensing transmitter (sensing transmitter (TX)): is a device that sends a sensing PPDU.
- Sensing receiver (sensing receiver (RX)): is a device that receives the sensing PPDU.

For example, an AP may be a sensing initiator or a sensing responder; and a device (station) may be a sensing initiator or a sensing responder.

For example, an AP may be a sensing transmitter, a sensing receiver, or both a sensing transmitter and a sensing receiver. Similarly, the device may be a sensing transmitter, a sensing receiver, or both a sensing transmitter and a sensing receiver.

In addition, in the current IEEE 802.11bf standard, sensing measurement is presented in a form of a session. A sensing measurement procedure includes sensing capabilities exchange, sensing measurement session, sensing measurement exchange, sensing measurement termination, and the like. The following separately describes these procedures.

2. Sensing capabilities exchange: Before a device participates in sensing, the device and an AP can exchange respective features and capabilities with each other. For example, device or AP capability information is carried in a sensing capabilities element (sensing capabilities element), where the sensing capabilities element may be carried in a frame such as a probe request frame (probe request frame), a probe response frame (probe response frame), an association request frame (association request frame), or an association response frame (association response frame).

In a possible implementation, for an unassociated device, the sensing capabilities element may be further carried in a sensing measurement query frame (sensing measurement query frame).

It should be understood that the foregoing frame that may carry the sensing capabilities element is merely an example, and does not constitute any limitation on the protection scope of this application. In this application, the sensing capabilities element may be carried in a frame other than the foregoing frame, for example, another frame transmitted between the AP and the device. Examples are not enumerated herein again.

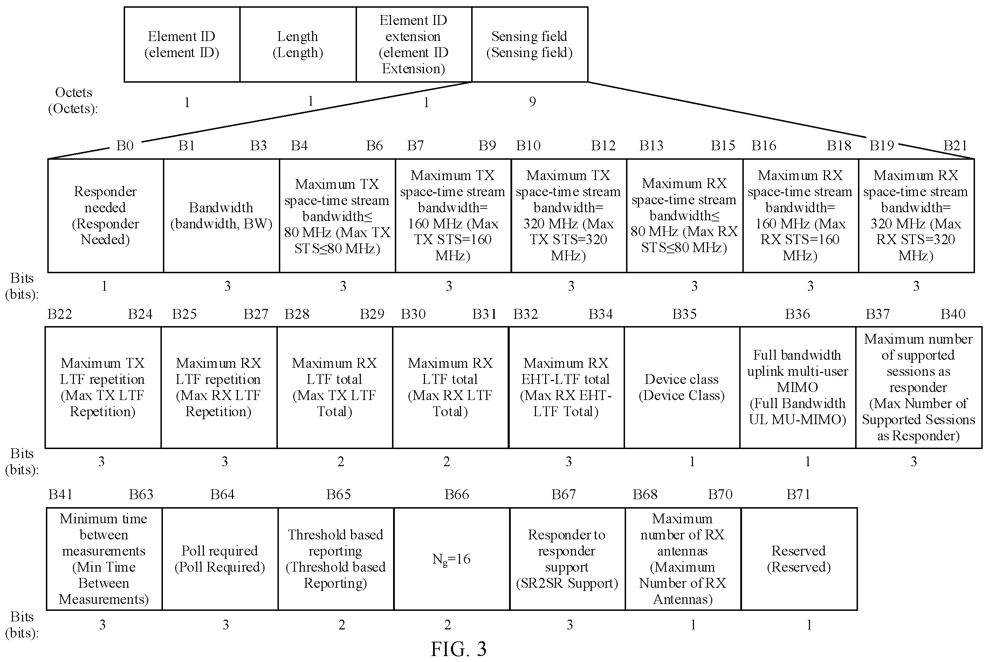

For ease of understanding, a possible structure of the sensing capabilities element is briefly described with reference to FIG. 3.

As shown in FIG. 3, the sensing capabilities element includes the following fields:
element identifier (Element ID), length (Length), element identifier extension (Element ID Extension), and sensing field (Sensing field).

The sensing field specifically includes responder needed (Responder Needed), bandwidth (bandwidth, BW), Maximum TX space-time stream bandwidth≤80 MHz (Max TX STS≤80 MHz), Maximum TX space-time stream bandwidth=160 MHz (Max TX STS=160 MHz), Maximum TX space-time stream bandwidth=320 MHz (Max TX STS=320 MHz), Maximum RX space-time stream bandwidth≤80 MHz (Max RX STS≤80 MHz), Maximum RX space-time stream bandwidth=160 MHz (Max RX STS = 160 MHz), Maximum RX space-time stream bandwidth=320 MHz (Max RX STS=320 MHz), maximum TX LTF repetition (Max TX LTF Repetition), maximum RX LTF repetition (Max RX LTF Repetition), maximum RX LTF total (Max TX LTF Total), maximum RX LTF total (Max RX LTF Total), device class (Device Class), full bandwidth uplink multi-user MIMO (Full Bandwidth UL MU-MIMO), maximum number of supported sessions as responder (Max Number of Supported Sessions as Responder), minimum time between measurements (Min Time Between Measurements), poll required (Poll Required), threshold based reporting (Threshold based Reporting), N_{g}=16, responder to responder support (SR2SR Support), maximum number of RX antennas (Maximum Number of RX Antennas), and reserved (Reserved) fields that are shown in FIG. 3.

3. Sensing measurement session establishment: A sensing initiator establishes a sensing measurement session when the sensing initiator needs to initiate sensing measurement. The sensing initiator may establish a sensing measurement session with one or more sensing responders. In this phase, devices that participate in sensing select and negotiate related parameters based on different applications.

In the sensing measurement session establishment phase, the sensing initiator sends a sensing measurement request (Sensing Measurement Request Frame) frame to the sensing responder to initiate sensing measurement setup and request roles and related parameters in the sensing measurement. After receiving the sensing measurement request frame, the device may send a sensing measurement response frame (Sensing Measurement Response frame) and comply with the following rules:
(1) If the sensing responder accepts sensing measurement parameters (sensing measurement parameters) requested in the sensing measurement request frame, a status code in the sensing measurement response frame is set to SUCCESS.
(2) If the sensing responder rejects the sensing measurement parameters requested in the sensing measurement request frame, but provides sensing measurement parameters preferred by the sensing responder in the sensing measurement response frame of the sensing responder, a status code is set to REJECTED_WITH_SUGGESTED_CHANGES.
(3) If the sensing responder rejects the sensing measurement parameters requested in the sensing measurement request frame and does not provide sensing measurement parameters preferred by the sensing responder, a status code is set to REQUEST_DECLINED.

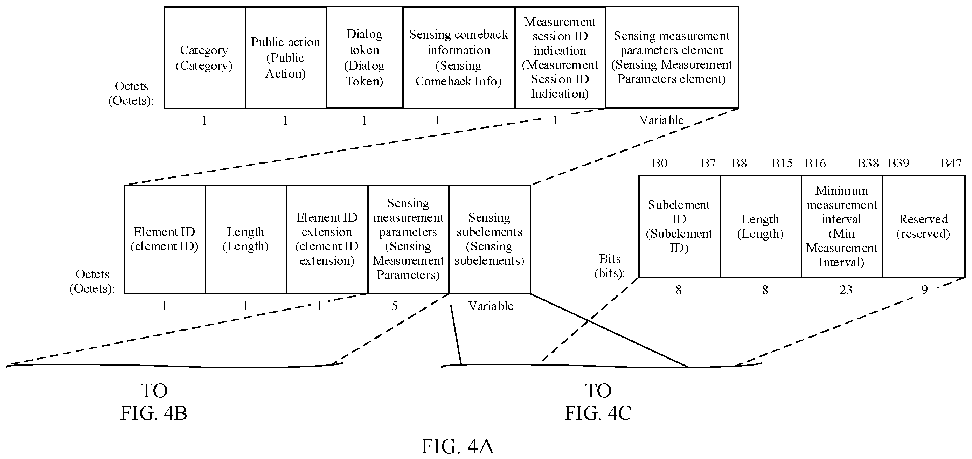

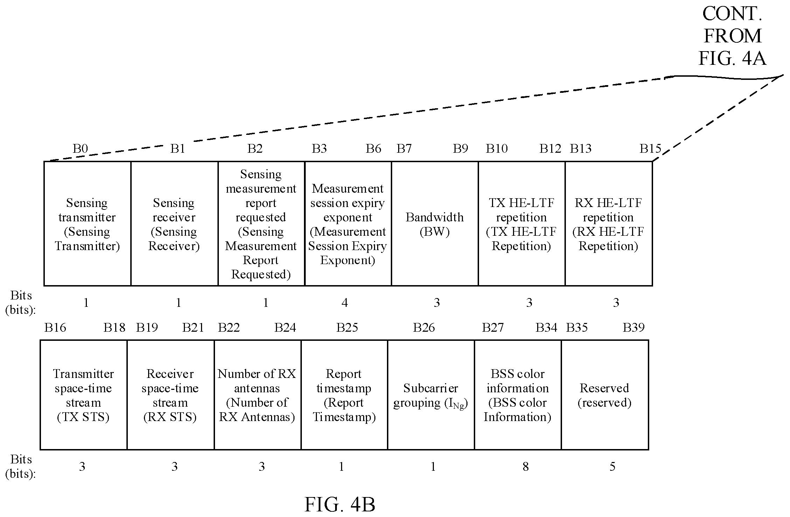

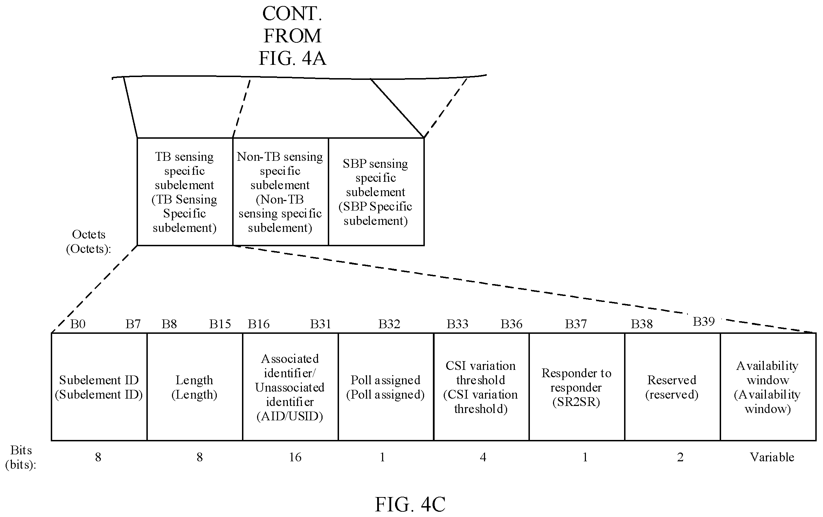

For ease of understanding, a possible structure of the sensing measurement request frame is briefly described with reference to FIG. 4A to FIG. 4C.

As shown in FIG. 4A to FIG. 4C, the sensing measurement request frame includes the following fields:
category (Category), public action (Public Action) (or referred to as protected dual of public action (Protected Dual of Public Action)), dialog token (Dialog Token), sensing comeback information (Sensing Comeback Info), measurement session identifier indication (Measurement Session ID Indication), and sensing measurement parameters element (Sensing Measurement Parameters element). The sensing measurement parameters element is optional.

It should be understood that a public action field (that is, a field whose length is one octet after a category (category) in an action field of a frame) in different frame structures in this application may be a public action (Public Action) field, a protected dual of public action (Protected Dual of Public Action) field, or a public action/protected dual of public action (Public Action/Protected Dual of Public Action) field. If the protected dual of public action frame field indicates that the frame is of a protected frame structure, details are not described in subsequent frame structures.

The category field in embodiments of this application may indicate a type of a message. The public action field in embodiments of this application may indicate a function of the message. The dialog token in embodiments of this application may identify a dialog. For example, a pair of request (request) and response (response) that correspond to each other may have a same dialog token.

Further, it can be learned from FIG. 4A to FIG. 4C that the sensing measurement parameters element field specifically includes the following fields:
element identifier (element ID), length (Length), element identifier extension (element ID Extension), sensing measurement parameters (Sensing Measurement Parameters), and sensing subelements (Sensing subelements). The sensing subelements field is optional.

In addition, it can be learned from FIG. 4A to FIG. 4C that the sensing measurement parameters field specifically includes the following fields:
sensing transmitter (Sensing Transmitter), sensing receiver (Sensing Receiver), sensing measurement report requested (Sensing Measurement Report Requested), measurement session expiry exponent (Measurement Session Expiry Exponent), bandwidth (BW), TX LTF repetition (TX LTF Repetition), RX LTF repetition (RX LTF Repetition), transmitter space-time stream (TX STS), receiver space-time stream (RX STS), number of RX antennas (Number of RX Antennas), report timestamp (Report Timestamp), subcarrier grouping (I_{Ng}), BSS color information (BSS color Information), and reserved (reserved) fields. When the sensing measurement report requested field is set to 1, it indicates that the sensing responder needs to send a sensing measurement report frame (sensing measurement report frame) during the sensing measurement exchange of the sensing measurement session. When the sensing measurement report requested field is set to 0, it indicates that the sensing responder does not need to send a sensing measurement report frame during the sensing measurement exchange of the sensing measurement session. For example, in this case, the sensing measurement report may be fed back by using a data payload (data payload).

In addition, it can be learned from FIG. 4A to FIG. 4C that the sensing subelements field specifically includes the following fields: TB sensing specific subelement (TB Sensing Specific subelement), non-TB sensing specific subelement (Non-TB Sensing Specific subelement), and SBP sensing specific subelement (SBP Specific subelement). The TB sensing specific subelement field includes subelement ID (Subelement ID), length (Length), associated identifier/unassociated identifier (AID/USID), poll assigned (Poll assigned), CSI variation threshold (CSI variation threshold), responder to responder (SR2SR), reserved (reserved), and availability window (Availability window) fields. The non-TB sensing specific subelement field includes subelement ID (Subelement ID), length (Length), minimum measurement interval (Min Measurement Interval), and reserved (reserved) fields.

4. Sensing measurement exchange: After sensing measurement session establishment is completed, a sensing initiator initiates one or more measurement exchanges (Sensing Measurement exchange) with one or more devices. A sensing measurement exchange may have two forms: a trigger-based (Trigger-Based, TB) sensing measurement exchange (Sensing Measurement exchange) and a non-trigger-based (Non-Trigger-Based, Non-TB) sensing measurement exchange (Sensing Measurement exchange).

The TB sensing measurement exchange is initiated by an AP as the sensing initiator, and the non-TB sensing measurement exchange is initiated by a non-AP STA as the sensing initiator.

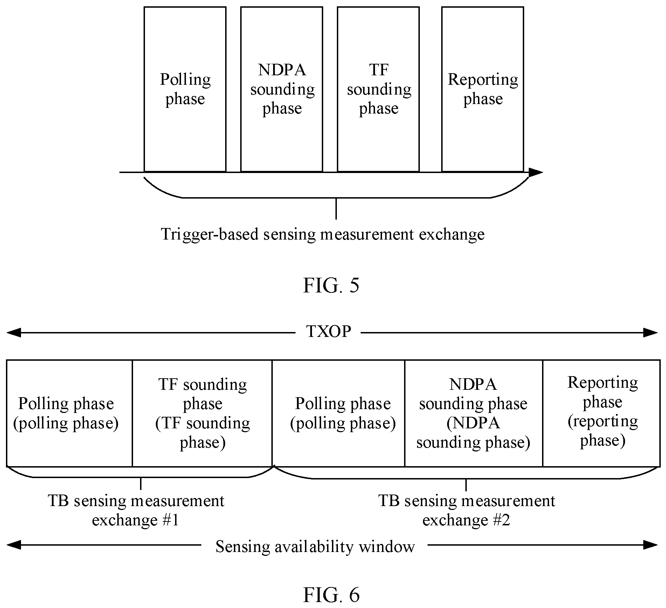

Specifically, the TB sensing measurement exchange includes at least one of the following phases:
polling phase (Polling phase), NDPA sounding phase (NDPA sounding phase), TF sounding phase (TF sounding phase), and reporting phase (Reporting phase). For example, the phases included in the trigger-based sensing measurement exchange are shown in FIG. 5.

It should be noted that all TB sensing measurement exchanges need to be performed in a sensing availability window (sensing availability window). The AP preempts a transmission opportunity (Transmission Opportunity, TXOP) in the sensing availability window, and the sensing measurement exchange is performed in the TXOP. One TXOP may include one or more TB sensing measurement exchanges (TB sensing measurement exchange).

It can be learned from FIG. 6 that one sensing availability window includes one TXOP, and one TXOP includes two TB sensing measurement exchanges (a TB sensing measurement exchange #1 and a TB sensing measurement exchange #2 shown in FIG. 6). The TB sensing measurement exchange #1 includes a polling phase and a TF sounding phase, and the TB sensing measurement exchange #2 includes a polling phase, an NDPA sounding phase, and a reporting phase.

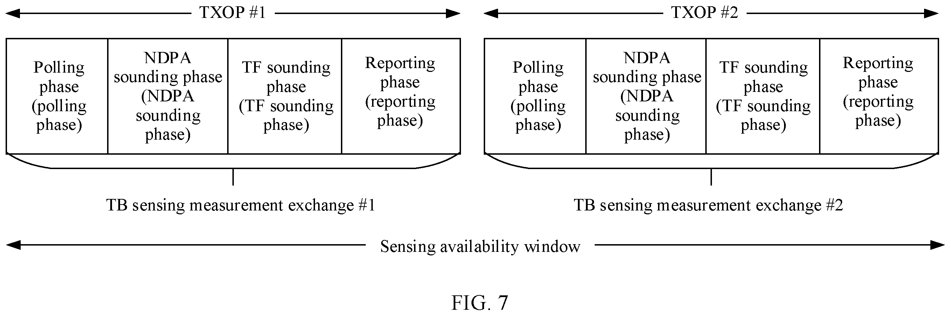

It can be learned from FIG. 7 that one sensing availability window includes two TXOPs (a TXOP #1 and a TXOP #2 shown in FIG. 7), one TXOP includes one TB sensing measurement exchange (a TB sensing measurement message exchange #1 included in the TXOP #1 and a TB sensing measurement exchange #2 included in the TXOP #2 shown in FIG. 7), and each sensing measurement message exchange includes a polling phase, an NDPA sounding phase, a TF sounding phase, and a reporting phase.

For example, the TB sensing measurement exchange includes two types of sounding manners.
(1) NDPA sounding: As a transmitter, an AP first sends a sensing NDP announcement (NDPA) frame to a device that participates in sensing, to notify the peer that an NDP is to be sent, and then the AP sends the NDP to the device for measurement. After the measurement is completed, the AP sends a sensing reporting trigger frame (sensing reporting trigger frame) or a sensing threshold-based reporting trigger frame (sensing threshold-based reporting trigger frame) to the device to trigger the device to feed back a report.
(2) TF sounding: As a receiver, an AP sends an SR2SI sounding trigger frame (SR2SI sounding trigger frame) to a device to trigger the device to send an NDP.

For NDPA sounding, after receiving the NDP, the device generates CSI data. The AP can trigger the device to send a report, where the report includes the CSI data. For TF sounding, the AP triggers the device to send NDP packets, and then the AP generates a report locally.

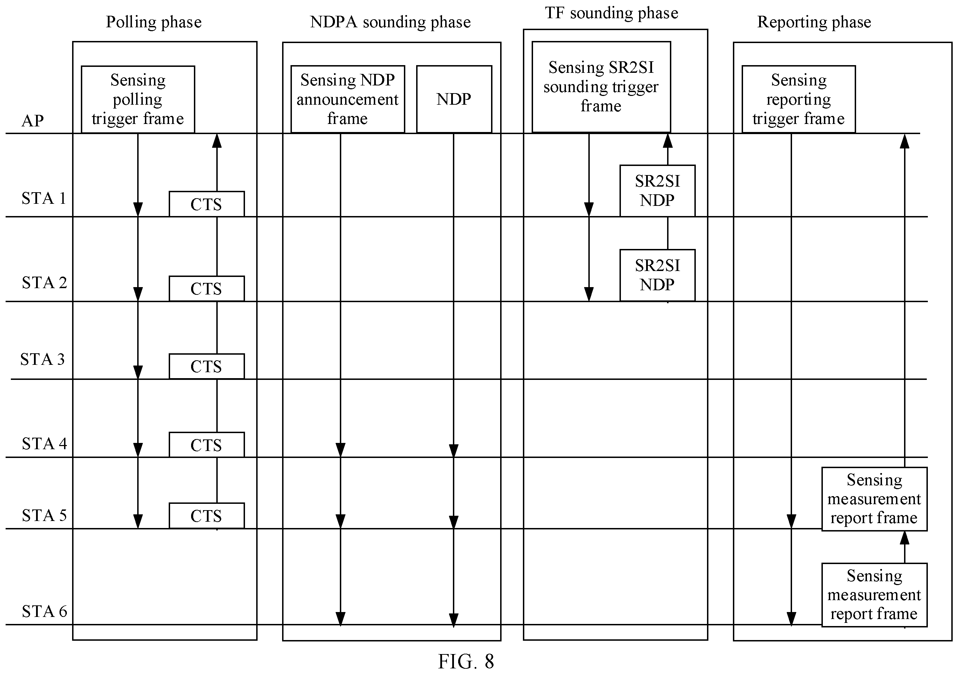

For ease of understanding, the TB sensing measurement exchange is briefly described with reference to FIG. 8. FIG. 8 is an example diagram of a TB sensing measurement exchange, which shows four phases included in the foregoing sensing measurement exchange: a polling phase (polling phase), an NDPA sounding phase (NDPA sounding phase), a TF sounding phase (TF sounding phase), and a reporting phase (reporting phase).

It can be learned from FIG. 8 that, an AP serves as a sensing initiator (sensing initiator), and a STA 1, a STA 2, a STA 3, a STA 4, a STA 5, and a STA 6 serve as sensing responders (sensing responder), where the STA 1, the STA 2, and the STA 3 serve as sensing transmitters (sensing transmitter), and the STA 4, the STA 5, and the STA 6 serve as sensing receivers (sensing receiver).

For example, it can be learned from FIG. 8 that, in a polling phase, the AP sends a sensing polling trigger frame (sensing polling trigger frame) to each of the STA 1, the STA 2, the STA 3, the STA 4, and the STA 5, and the STA 1, the STA 2, the STA 3, the STA 4, and the STA 5 each send a clear to send (clear to send, CTS) frame to the AP; in an NDPA sounding phase, the AP sends a sensing NDP announcement frame (Sensing NDP announcement frame) to each of the STA 4, the STA 5, and the STA 6, to notify the STA 4, the STA 5, and the STA 6 that an NDP is to be sent, and then the AP sends the NDP to each of the STA 4, the STA 5, and the STA6 for sensing measurement; in a TF sounding phase, the AP sends a sensing SR2SI sounding trigger frame (sensing SR2SI Sounding Trigger frame) to each of the STA 1 and the STA 2, and the STA 1 and the STA 2 each send a sensing responder to sensing initiator (Sensing responder to sensing initiator, SR2SI) NDP to the AP; and in a reporting phase, the AP sends a sensing reporting trigger frame (Sensing Reporting Trigger frame) to each of the STA 5 and the STA 6, and the STA 5 and the STA 6 each send a sensing measurement report frame (Sensing measurement Report frame) to the AP.

Specifically, the non-TB sensing measurement exchange process includes two phases: a measurement sounding phase (measurement sounding phase) and a reporting phase (reporting phase). The device serves as a sensing initiator and initiates sensing measurement to the AP. In the measurement sounding phase, the device first sends an NDPA frame to the AP and then sends an SR2SI NDP to the AP. Then, the AP sends an SI2SR NDP to the device. If the device needs the AP to feed back a report, the AP feeds back the report in the reporting phase after the device completes sending of the SR2SI NDP.

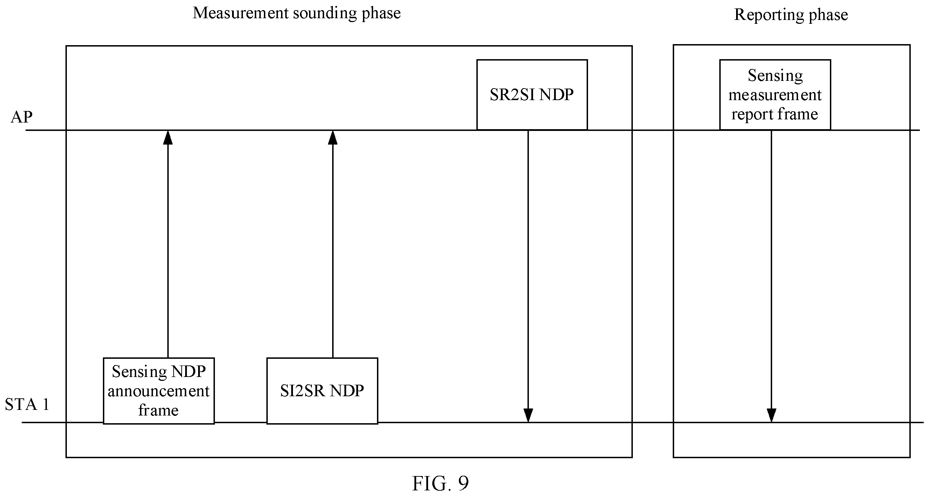

For ease of understanding, the non-TB sensing measurement exchange is briefly described with reference to FIG. 9. FIG. 9 is an example diagram of a non-TB sensing measurement exchange. It can be learned from FIG. 9 that, an AP serves as a sensing responder (sensing responder), and a STA 1 serves as a sensing initiator (sensing initiator). In a measurement sounding phase, the STA 1 sends a sensing NDP announcement frame (Sensing NDP announcement frame) to the AP, to notify the AP that an NDP is to be sent, and then the STA 1 sends an SI2SR NDP to the AP for sensing measurement. The AP sends an SR2SI NDP to the device. If the STA 1 needs the AP to feed back a report, the AP feeds back the report in the reporting phase after the STA 1 completes sending of the SR2SR NDP.

It can be learned from the foregoing descriptions that the TB sensing measurement exchange process and the non-TB sensing measurement exchange process each may include a reporting phase. In the reporting phase in the TB sensing measurement exchange process, a device sends a sensing measurement report frame (for example, the STA 5 and the STA 6 shown in FIG. 8 send sensing measurement report frames). In the reporting phase in the non-TB sensing measurement exchange process, an AP sends a sensing measurement report frame (for example, the AP shown in FIG. 9 sends a sensing measurement report frame).

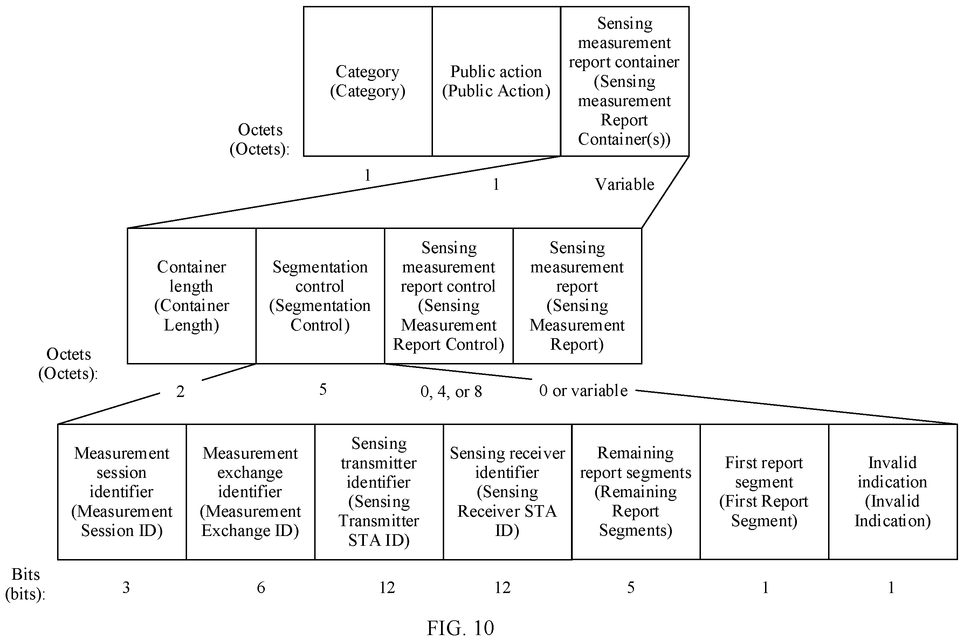

For example, a frame structure of the sensing measurement report frame is shown in FIG. 10. As shown in FIG. 10, the sensing measurement report frame includes the following fields:
category (Category), public action (Public Action) (or referred to as protected dual of public action (Protected Dual of Public Action)), and sensing measurement report container (Sensing measurement Report Container(s)) fields.

Further, it can be learned from FIG. 10 that the sensing measurement report container field specifically includes the following fields:
container length (Container Length), segmentation control (Segmentation Control), sensing measurement report control (Sensing Measurement Report Control), and sensing measurement report (Sensing Measurement Report) fields, where a frame structure of the segmentation control field in the sensing measurement report container is shown in FIG. 10, and includes:
measurement session identifier (Measurement Session ID), measurement exchange identifier (Measurement Exchange ID), sensing transmitter identifier (Sensing Transmitter STA ID), sensing receiver identifier (Sensing Receiver STA ID), remaining report segments (Remaining Report Segments), first report segment (First Report Segment), and invalid indication (Invalid Indication) fields.

For example, descriptions of the fields included in the segmentation control field in the sensing measurement report container are shown in Table 1:

**Table 1: Segmentation control field**

| **Field (Field)** | **Size (Size (bits))** | **Definition (Definition)** |
|---|---|---|
| Measurement session identifier (Measurement Session ID) | 3 | Identifies a sensing measurement session corresponding to a sensing measurement report frame (Identifies the sensing measurement session corresponding to the Sensing Measurement Report frame) |
| Measurement exchange identifier (Measurement Exchange ID) | 6 | Identifies a sensing measurement exchange corresponding to a sensing measurement report frame (Identifies the sensing measurement exchange corresponding to the Sensing Measurement Report frame) |
| Sensing transmitter identifier (Sensing Transmitter STA ID) | 12 | Identifies a sensing transmitter. For TB measurement reporting: Set to 12 LSBs of an AID or a USID of the sensing transmitter corresponding to a sensing measurement report frame if the sensing transmitter is a non-AP STA. Set to 0 if the sensing transmitter is an AP. For non-TB measurement reporting: Reserved (For TB measurement reporting: Set to the 12 LSBs of the AID or USID of the sensing transmitter corresponding to the Sensing Measurement Report frame if the sensing transmitter is a non-AP STA. Set to 0 if the sensing transmitter is an AP. For non-TB measurement reporting: Reserved) |
| Sensing receiver (Sensing Receiver STA ID) | 12 | Identifies a sensing receiver. For TB measurement reporting: Set to 12 LSBs of an AID or a USID of the sensing receiver corresponding to a sensing measurement report frame if the sensing receiver is a non-AP STA. Set to 0 if the sensing receiver is an AP. For non-TB measurement reporting: |
| | | Reserved (For TB measurement reporting: Set to the 12 LSBs of the AID or USID of the sensing receiver corresponding to the Sensing Measurement Report frame if the sensing receiver is a non-AP STA. Set to O if the sensing receiver is an AP. For non-TB measurement reporting: Reserved) |
| Remaining report segments (Remaining Report Segments) | 5 | Indicates a number of remaining report segments corresponding to a sensing measurement report frame: Set to 0 for a last report segment of a segmented report or an only report segment of an unsegmented report. Set to a value between 1 and 31 for a feedback segment that is not a last report segment of a segmented report (Indicates the number of remaining report segments corresponding to the Sensing Measurement Report frame: Set to 0 for the last report segment of a segmented report or the only report segment of an unsegmented report. Set to a value between 1 and 31 for a feedback segment that is not the last report segment of a segmented report) |
| First report segment (First Report Segment) | 1 | Set to 1 for a first report segment of a segmented report or an only feedback segment of an unsegmented report. Otherwise set to 0 (Set to 1 for the first report segment of a segmented report or the only feedback segment of an unsegmented report. Otherwise set to 0) |
| Invalid indication (Invalid Indication) | 1 | Indicates whether a reported measurement result is invalid for basic reporting or a CSI variation feedback value is invalid for threshold based reporting. An invalid indication field value of 1 indicates that the reported measurement result or the reported CSI variation feedback value is invalid, in which case a remaining report segments field is set to 0 and a sensing measurement report control field and a sensing measurement report field are not included in a frame. An invalid indication field value of 0 indicates that the reported measurement result or the reported CSI variation feedback value is valid (The Invalid Indication field indicates whether the reported measurement result is invalid for basic reporting or the CSI variation feedback value is invalid for the threshold based reporting. An Invalid Indication field value of 1 indicates that the reported measurement result or the reported CSI variation feedback value is invalid, in which case the Remaining Report Segments field is set to 0 and the Sensing Measurement Report Control field and Sensing Measurement Report field are not included in the frame. A value of 0 indicates that the reported measurement result or the reported CSI variation feedback value is valid) |

It can be learned from the foregoing descriptions that the remaining report segments and the first report segment indicate a sequence number of a current segment. If the invalid indication field is 1, the sensing measurement report control and the sensing measurement report are not included.

Specifically, CSI is carried in the sensing measurement report container. If measured CSI exceeds a limit of a maximum report segment (Sensing Report Segment Size), the measured CSI is sent in segments (segment). Each segment is separately carried in a sensing measurement report container.

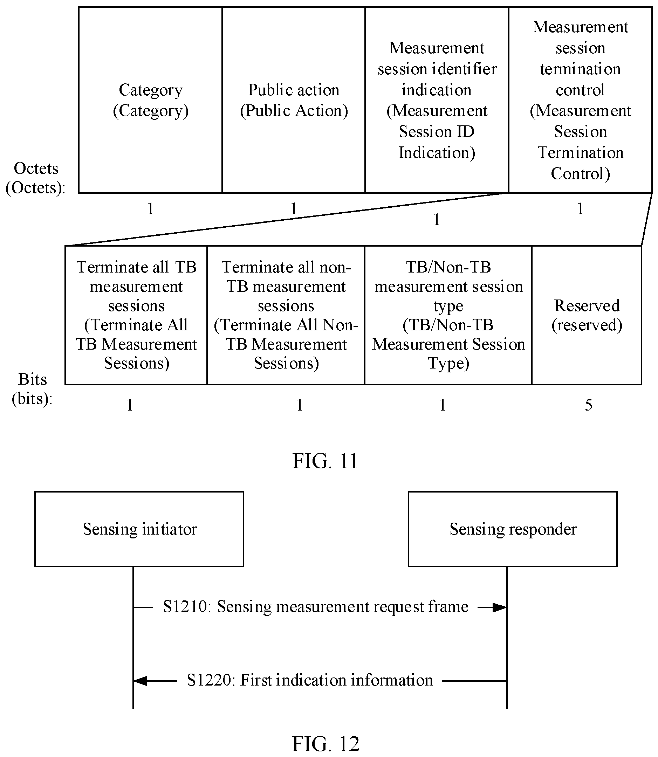

5. Sensing measurement termination: In a sensing measurement process, a device or an AP may send a sensing measurement termination frame (or referred to as a sensing measurement termination frame) to terminate a session. A frame structure of the sensing measurement termination frame is shown in FIG. 11, and includes the following fields:
category (Category), public action (Public Action) (or referred to as protected dual of public action (Protected Dual of Public Action)), measurement session identifier indication (Measurement Session ID Indication), and measurement session termination control (Measurement Session Termination Control) fields.

Further, it can be learned from FIG. 11 that the measurement session termination control field specifically includes the following fields:
terminate all TB measurement sessions (Terminate All TB Measurement Sessions), terminate all non-TB measurement sessions (Terminate All Non-TB Measurement Sessions), TB or non-TB measurement session type (TB/Non-TB Measurement Session Type), and reserved (reserved) fields.

6. Device algorithm capability: Different devices have different algorithm processing capabilities for received CSI. There are three types of devices based on device algorithm capabilities:
(1) Strong algorithm adaptability compensation capability, also referred to as strong algorithm adaptability adjustment capability: Some devices can execute an advanced sensing algorithm. For example, even if the device moves, the device can still effectively process the received CSI in an unstable environment. Therefore, even if a channel changes, it is possible to identify whether a channel change is caused by a sensing target or a change is caused by device movement.
(2) Weak algorithm adaptability compensation capability, also referred to as weak algorithm adaptability adjustment capability: Some devices can execute only an intermediate sensing algorithm. For example, when an environment is unstable due to device movement, it may be difficult for the sensing algorithm to accurately identify whether a channel change is caused by a person or a change is caused by the device movement. Therefore, only CSI fed back by a static device (in a stable environment) can be processed. For example, a mobile phone performs a sensing measurement exchange in a static state. If the mobile phone is moved by a person, the mobile phone experiences more channel changes based on an original channel when moving from one location to another location. Therefore, in the sensing measurement exchange performed in this case, the sensing initiator may be unable to process concurrent CSI data, resulting in a deteriorated sensing effect. However, if the movement ends and the device is in a stable state, the sensing initiator can still process the received CSI.
(3) No algorithm adaptive compensation capability, or referred to as no algorithm adaptive adjustment capability: Some devices can execute only a low-level sensing algorithm. For example, if a channel change is caused by device movement, the sensing algorithm cannot identify whether a channel change is caused by a person or a change is caused by device movement. In this case, a sensing effect is deteriorated provided that the device moves.

With reference to FIG. 1, the foregoing briefly describes a scenario to which the communication method provided in embodiments of this application can be applied, describes basic concepts that may be involved in embodiments of this application, and describes, in the basic concepts, procedures such as sensing capabilities exchange, sensing measurement session, sensing measurement exchange, and sensing measurement termination that are included in the sensing measurement procedure. In conclusion, if the AP serves as a sensing initiator, the AP may perform a sensing measurement exchange with one or more devices in a negotiated sensing time window, and then require, based on different measurement types, the devices to feed back sensing measurement reports. If the device serves as a sensing initiator, the device performs a sensing measurement exchange with an AP, and then requires, based on a requirement, the AP to feed back a sensing measurement report.

It should be noted that, in a Wi-Fi sensing scenario, when the AP performs sensing together with a plurality of sensing devices, because different sensing devices have different functions, the sensing devices may be moved due to various human factors or non-human factors, and such the movement may greatly affect sensing performance. For example, impact caused by movement of the sensing device includes but is not limited to the following several possibilities:
(1) A signal propagation path between the AP and the sensing device changes, and a channel feature (for example, signal attenuation or a phase change) changes, which affects sensing analysis based on signal processing.
(2) Measurement uncertainty increases, so that it may be difficult for the sensing algorithm to accurately identify whether a channel change caused by a person or a change caused by device movement, and new interference is introduced.
(3) A sensing range changes, a new area is covered, and an original area may become a blind zone.

This application provides a communication method, to improve sensing measurement performance in a device movement scenario.

The following describes, in detail with reference to the accompanying drawings, the technical solutions provided in this application. Embodiments of this application may be applied to a plurality of different scenarios, including but not limited to the scenario shown in FIG. 1.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receiver device, a transmitter device, or a functional module that is in the receiver device or the transmitter device and that can invoke the program and execute the program.

Without loss of generality, the following describes, in detail by using an exchange between the sensing initiator and the sensing responder as an example, the communication method provided in embodiments of this application. In embodiments of this application, the sensing initiator may be an access point AP, a chip system inside the AP, or a multi-link device (multi-link device, MLD) (for example, an access point multi-link device (access point MLD, AP MLD)), and the sensing responder may be a non-access point non-AP (for example, a STA), a chip system inside the non-AP, or an MLD (for example, a station multi-link device (station MLD, STA MLD)); the sensing initiator may be a non-AP, a chip system inside the non-AP, or a STA MLD, and the sensing responder may be an AP, a chip system inside the AP, or an AP MLD; the sensing initiator and the sensing responder are access points APs, chip systems inside the APs, or AP MLDs; or the sensing initiator and the sensing responder are non-access points non-APs, chip systems inside the non-APs, or STA MLDs.

It should be noted that a name of an execution body is not limited in this application, and any device that can implement a corresponding function falls within the protection scope of this application.

FIG. 12 is a schematic flowchart of a communication method according to an embodiment of this application. The following step is included.

S1210: A sensing initiator sends a sensing measurement request frame to a sensing responder, and correspondingly, the sensing responder receives the sensing measurement request frame from the sensing initiator.

Specifically, the sensing measurement request frame is used to request to perform sensing measurement.

In this embodiment, the sensing initiator may perform sensing measurement with one or more sensing responders, and the sensing initiator may send a sensing measurement request frame to each of the one or more sensing responders that participate in the sensing measurement. For ease of description, descriptions are provided in this embodiment by using an example in which the sensing initiator sends a sensing measurement request frame to a sensing responder.

In a possible implementation, in this embodiment, a sensing measurement exchange between the sensing initiator and the sensing responder is a TB sensing measurement exchange, the sensing initiator is an AP, and the sensing responder is a STA.

In another possible implementation, in this embodiment, a sensing measurement exchange between the sensing initiator and the sensing responder is a non-TB sensing measurement exchange, the sensing initiator is a STA, and the sensing responder is an AP.

In this embodiment, if the sensing responder moves in a process of the sensing measurement, the sensing responder may notify the sensing initiator by using first indication information. In this case, the method procedure shown in FIG. 12 further includes the following step.

S1220: The sensing responder sends the first indication information to the sensing initiator, and correspondingly, the sensing initiator receives the first indication information from the sensing responder.

Specifically, in the process of the sensing measurement, if the sensing responder moves, the sensing responder may provide a feedback for the sensing initiator by using the first indication information, so that the sensing initiator learns, based on the first indication information, that the sensing responder moves. The process of the sensing measurement includes a sensing measurement exchange phase and a sensing measurement termination phase, that is, the sensing responder may feed back the first indication information in the sensing measurement exchange phase, or may feed back the first indication information in the sensing measurement termination phase.

It should be noted that in this embodiment, descriptions are provided mainly by using an example in which the first indication information is reported in a scenario in which the sensing responder moves, but application of the communication method in another scenario is not limited. By way of example, and not limitation, the first indication information may indicate another scenario. For example, when detecting that electromagnetic interference from another device in surrounding space increases, the sensing responder may also report an interference increase case by using the first indication information. For another example, the sensing responder learns that a sensing range changes, including some interference sources, and may also report the sensing range change by using the first indication information. The first indication information may indicate a scenario other than the movement, and specific scenarios are not enumerated herein one by one by using examples.

For example, in this embodiment, in the process of the sensing measurement, that the sensing responder sends the first indication information to the sensing initiator includes but is not limited to the following possible implementations:
Manner 1: The sensing responder sends a sensing measurement termination frame to the sensing initiator after a first sensing measurement exchange, where the sensing measurement termination frame includes the first indication information; and the first sensing measurement exchange is a sensing measurement exchange included in the process of the sensing measurement. For example, the first sensing measurement exchange is a sensing measurement exchange in the process of the sensing measurement.

In the case shown in Manner 1, the sensing responder includes the first indication information in the sensing measurement termination frame, to indicate that the sensing responder moves.

In a possible implementation, when the sensing measurement exchange is of a TB sensing measurement exchange type, in the case shown in Manner 1, if the STA moves, the STA sends a sensing measurement termination frame, to notify that the sensing procedure is terminated, where the sensing measurement termination frame includes a field indicating that the sensing measurement is terminated because the STA moves.

In another possible implementation, when the sensing measurement exchange is of a non-TB sensing measurement exchange type, in the case shown in Manner 1, if the AP moves, the AP sends a sensing measurement termination frame, to notify that the sensing procedure is terminated, where the sensing measurement termination frame includes a field indicating that the sensing measurement is terminated because the AP moves.

For example, a mobility indication (Mobility indication) field indicating that the sensing measurement is terminated because the sensing responder moves may be carried in the sensing measurement termination frame. The mobility indication field is the foregoing first indication information. It should be understood that the mobility indication field may occupy a reserved field in the sensing measurement termination frame, or may be a newly added field in the sensing measurement termination frame.

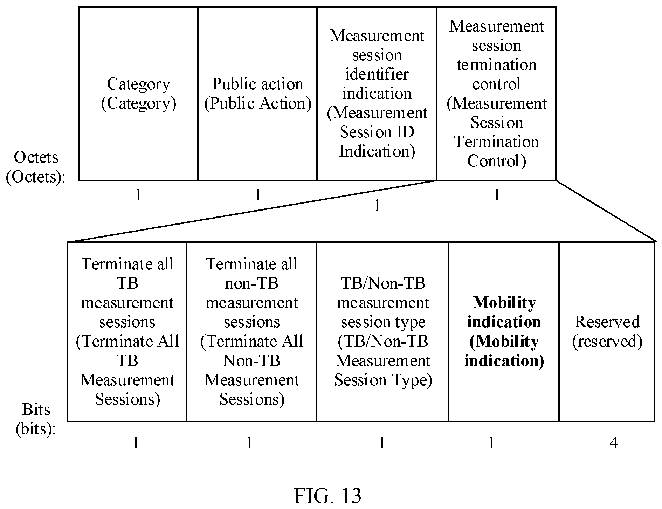

For example, the sensing measurement termination frame sent by the STA and/or the sensing measurement termination frame sent by the AP are/is shown in FIG. 13. It can be learned from FIG. 13 that, compared with the measurement session termination control field in the sensing measurement termination frame shown in FIG. 11, the measurement session termination control field in the sensing measurement termination frame in this embodiment includes a 1-bit mobility indication field.

It should be understood that FIG. 13 is merely an example, and does not constitute any limitation on the protection scope of this application. In the case shown in Manner 1, the first indication information may be further carried in another field in the sensing measurement termination frame, for example, may be carried in a measurement session identifier field in the sensing measurement termination frame. A specific location of the first indication information in the sensing measurement termination frame is not limited. Details are not described herein again.

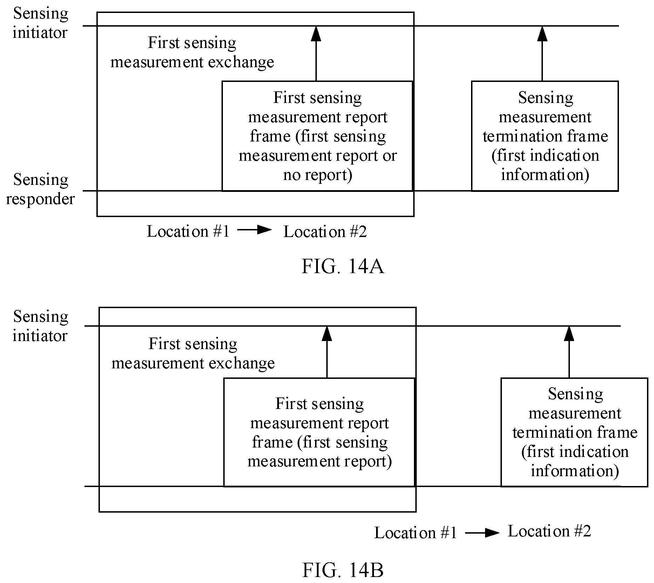

For example, that the sensing responder sends the sensing measurement termination frame after the first sensing measurement exchange, and includes the first indication information in the sensing measurement termination frame includes the following several possible implementations:
(1) If the sensing responder moves during the first sensing measurement exchange (or in the process of the first sensing measurement exchange), the sensing responder sends a sensing measurement termination frame after the first sensing measurement exchange ends, and includes the first indication information in the sensing measurement termination frame.
   For ease of understanding, an implementation of sending the sensing measurement termination frame in the case shown in Manner 1 is briefly described with reference to FIG. 14A. It can be learned from FIG. 14A that, the sensing responder moves (moves from a location #1 to a location #2 shown in FIG. 14A) during the first sensing measurement exchange, and reports a first sensing measurement report frame during the first sensing measurement exchange, where the first sensing measurement report frame may or may not include a first sensing measurement report; and sends a sensing measurement termination frame after the first sensing measurement exchange ends, and includes the first indication information in the sensing measurement termination frame.
(2) If the sensing responder moves after the first sensing measurement exchange, the sensing responder sends a sensing measurement termination frame after the first sensing measurement exchange ends, and includes the first indication information in the sensing measurement termination frame.

For ease of understanding, an implementation of sending the sensing measurement termination frame in the case shown in Manner 1 is briefly described with reference to FIG. 14B. It can be learned from FIG. 14B that, the sensing responder moves (moves from a location #1 to a location #2 shown in FIG. 14B) after the first sensing measurement exchange, and reports a first sensing measurement report frame during the first sensing measurement exchange, where the first sensing measurement report frame includes a first sensing measurement report; and sends a sensing measurement termination frame after the first sensing measurement exchange ends, and includes the first indication information in the sensing measurement termination frame.

Manner 2: The sensing responder sends a first sensing measurement report frame to the sensing initiator in a process of a first sensing measurement exchange, where the first sensing measurement report frame includes the first indication information; and the first sensing measurement exchange is a sensing measurement exchange included in the process of the sensing measurement. For example, the first sensing measurement exchange is a sensing measurement exchange in the process of the sensing measurement.

In the case shown in Manner 2, the sensing responder includes the first indication information in the first sensing measurement report frame, to indicate that the sensing responder moves.

For example, a mobility indication (Mobility indication) field indicating that the sensing measurement is terminated because the sensing responder moves may be carried in the first sensing measurement report frame. The mobility indication field is the foregoing first indication information. It should be understood that the mobility indication field may occupy a reserved field in the first sensing measurement report frame, or may be combined with a field in the first sensing measurement report frame.

In the case shown in Manner 2, in the process of the sensing measurement exchange, if the sensing responder moves, the sensing measurement report may be no longer valid. Therefore, when sending the sensing measurement report frame, the sensing responder indicates mobility in the sensing measurement report frame, which is specifically as follows:

The sensing measurement report frame does not carry the sensing measurement report, that is, a sensing measurement report container in the sensing measurement report frame does not include a sensing measurement report control field and a sensing measurement report field. An invalid indication field in a segmentation control field in the sensing measurement report container in the sensing measurement report frame is set to 1. The first report segment field is redefined as a first report segment/mobility indication (First Report Segment/Mobility Indication) field. This field is used together with the invalid indication field. Usage is as follows:

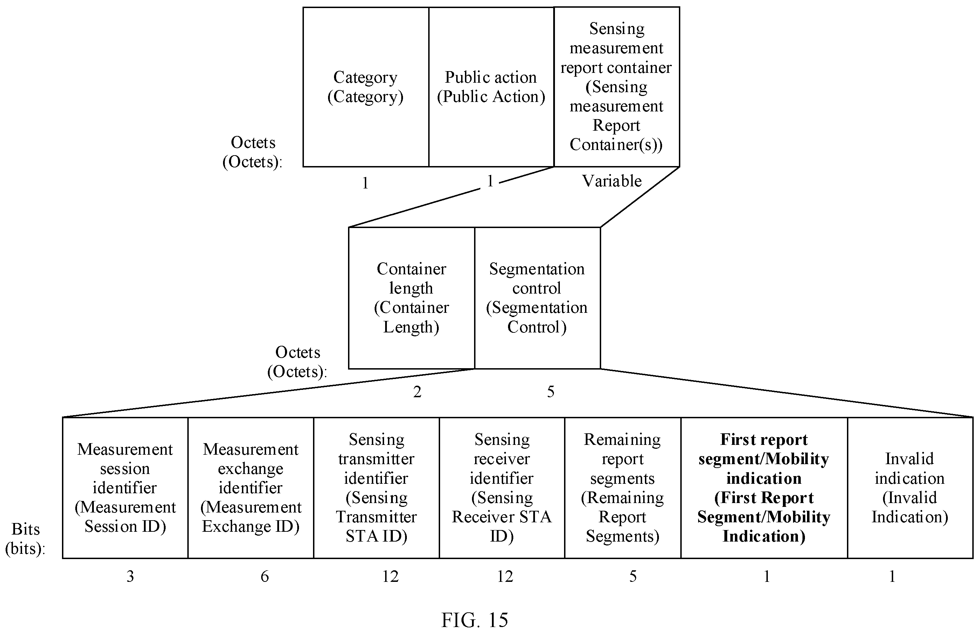

The first report segment/mobility indication field is defined as a first report segment when no movement occurs, indicating whether a current segment is a first segment; and is defined as a mobility indication when the movement occurs, indicating mobility information. If the movement occurs and no report is fed back, this field is meaningless. Therefore, this field may be defined as the mobility indication. If the movement occurs, this field is set to 1. A modified segmentation control field is shown in FIG. 15. It can be learned from FIG. 15 that, compared with a measurement session termination control field in the sensing measurement report frame shown in FIG. 10, the sensing measurement report container field in the sensing measurement report frame in this embodiment does not include a sensing measurement report control field and a sensing measurement report field, and the first report segment field in the segmentation control field in the sensing measurement report container is modified to the first report segment/mobility indication field.

For example, in the case shown in Manner 2, for definitions of the fields in the first sensing measurement report frame, refer to the foregoing descriptions in Table 1. A difference lies in that a definition of the first report segment/mobility indication field in the first sensing measurement report frame in the case shown in Manner 2 is different from a definition of the first report segment field in Table 1.

The first report segment/mobility indication field is defined as follows: If the invalid indication field is set to 0, this field is set to 1 for a first report segment of a segmented report or an only feedback segment of an unsegmented report. Otherwise set to 0. If the invalid indication field is set to 1, this field being set to 1 indicates that the sensing responder moves in the process of the sensing measurement exchange. Otherwise set to 0 (If the invalid indication field sets to 0, this field sets to 1 for the first report segment of a segmented report or the only feedback segment of an unsegmented report. Otherwise sets to 0. If the invalid indication field sets to 1, this field sets to 1 indicates the sensing responder moves during the sensing measurement exchange. Otherwise sets to 0)

It should be understood that FIG. 15 is merely an example, and does not constitute any limitation on the protection scope of this application. In the case shown in Manner 2, the first indication information may be further carried in another field in the first sensing measurement report frame, for example, may be carried in a sensing measurement report control field in the first sensing measurement report frame. A specific location of the first indication information in the first sensing measurement report frame is not limited. Details are not described herein again.

For example, that the sensing responder sends the first sensing measurement report frame in the process of the first sensing measurement exchange, and includes the first indication information in the first sensing measurement report frame includes the following implementations:
If the sensing responder moves during the first sensing measurement exchange (or in the process of the first sensing measurement exchange), the sensing responder sends a sensing measurement termination frame after the first sensing measurement exchange ends, and includes the first indication information in the sensing measurement termination frame.

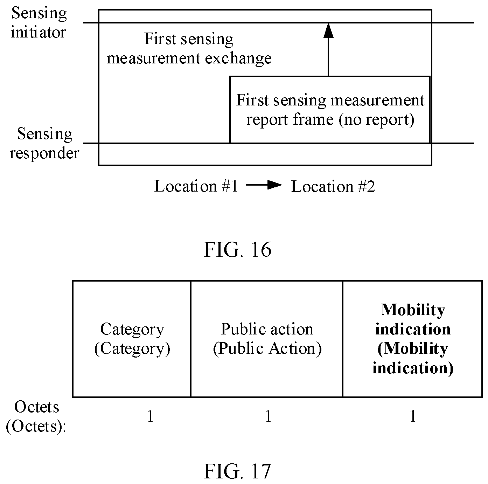

For ease of understanding, an implementation of sending the first sensing measurement report frame in the case shown in Manner 2 is briefly described with reference to FIG. 16 It can be learned from FIG. 16 that the sensing responder moves (moves from a location #1 to a location #2 shown in FIG. 16) during the first sensing measurement exchange, and reports a first sensing measurement report frame during the first sensing measurement exchange, where the first sensing measurement report frame does not include a first sensing measurement report. Specifically, the first sensing measurement report frame includes the first indication information.

Manner 3: The sensing responder sends a first sensing measurement report frame and a mobility indication frame to the sensing initiator in a process of a first sensing measurement exchange, where the mobility indication frame includes the first indication information; and the first sensing measurement exchange is a sensing measurement exchange included in the process of the sensing measurement. For example, the first sensing measurement exchange is a sensing measurement exchange in the process of the sensing measurement.

In the case shown in Manner 3, the sensing responder may include the first indication information in the mobility indication frame, to indicate that the sensing responder moves. The mobility indication frame may be a newly designed frame, and an existing frame structure does not need to be reused. The first sensing measurement report frame may include or not include the first sensing measurement report.

For example, in the process of the sensing measurement exchange, if the sensing responder moves, a new mobility indication frame (mobility indication frame) may be designed. For example, a frame structure of the mobility indication frame is shown in FIG. 17.

By way of example, and not limitation, in the case shown in Manner 3, the first sensing measurement report frame and the mobility indication frame are included in a first frame. For example, the first sensing measurement report frame and the mobility indication frame are aggregated into an A-MPDU for sending to the sensing initiator. Alternatively, the first sensing measurement report frame and the mobility indication frame are sent separately. For example, the mobility indication frame is first sent to indicate that movement occurs, and then the first sensing measurement report frame is sent, so that the sensing initiator learns that the first sensing measurement report included in the first sensing measurement report frame is a sensing measurement report generated in a movement scenario.

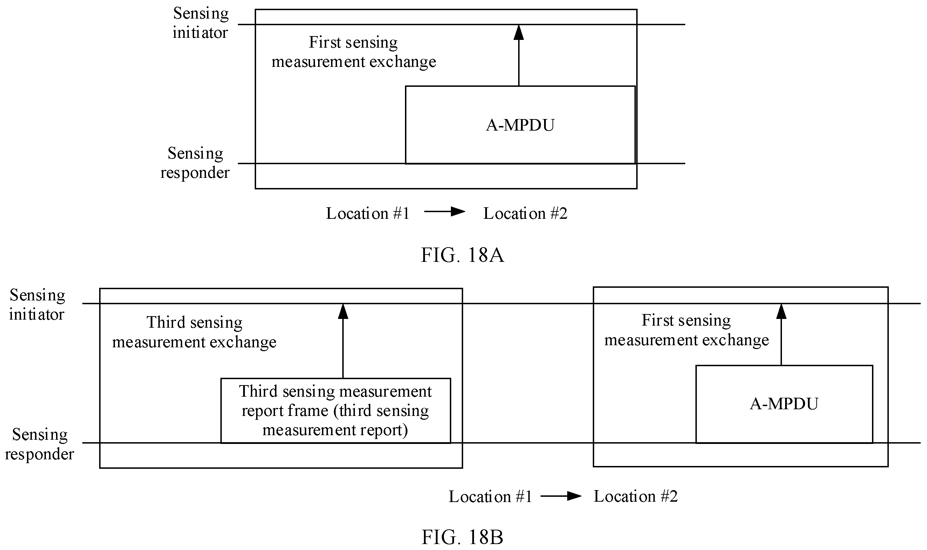

For example, that the sensing responder sends the mobility indication frame in the process of the first sensing measurement exchange, and includes the first indication information in the mobility indication frame includes the following implementations:
(1) If the sensing responder moves during the first sensing measurement exchange (or in the process of the first sensing measurement exchange), the sensing responder sends a first sensing measurement report frame and a mobility indication frame in the process of the first sensing measurement exchange, and includes the first indication information in the mobility indication frame.
   For ease of understanding, an implementation of sending the first sensing measurement report frame and the mobility indication frame in the case shown in Manner 1 is briefly described with reference to FIG. 18A. It can be learned from FIG. 18A that, the sensing responder moves (moves from a location #1 to a location #2 shown in FIG. 18A) during the first sensing measurement exchange, and reports a first sensing measurement report frame during the first sensing measurement exchange, where the first sensing measurement report frame may or may not include a first sensing measurement report. In addition, the sensing responder sends a mobility indication frame in the process of the first sensing measurement exchange, and includes the first indication information in the mobility indication frame. The first sensing measurement report frame and the mobility indication frame may be aggregated into an A-MPDU.
(2) The sensing responder moves after a third sensing measurement exchange, where the third sensing measurement exchange is a sensing measurement exchange previous to the first sensing measurement exchange. In this case, the sensing responder sends a first sensing measurement report frame and a mobility indication frame in the process of the first sensing measurement exchange, and includes the first indication information in the mobility indication frame.

For ease of understanding, an implementation of sending the first sensing measurement report frame and the mobility indication frame in the case shown in Manner 1 is briefly described with reference to FIG. 18B. It can be learned from FIG. 18B that, the sensing responder moves (moves from a location #1 to a location #2 shown in FIG. 18B) after the third sensing measurement exchange, and may report a third sensing measurement report frame during the third sensing measurement exchange; and reports a first sensing measurement report frame during the first sensing measurement exchange, where the first sensing measurement report frame may or may not include a first sensing measurement report. In addition, the sensing responder sends a mobility indication frame in the process of the first sensing measurement exchange, and includes the first indication information in the mobility indication frame. The first sensing measurement report frame and the mobility indication frame may be aggregated into an A-MPDU.

It should be understood that Manner 1 to Manner 3 are merely examples for describing a manner in which the sensing responder sends the first indication information to the sensing initiator, and do not constitute any limitation on the protection scope of this application. The sensing responder may further send the first indication information to the sensing initiator in another manner. Examples are not enumerated herein again.

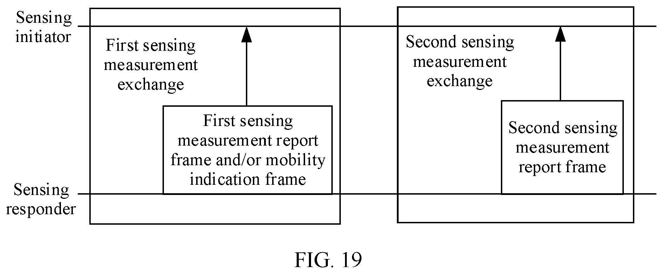

In addition, it should be noted that, in the cases shown in Manner 2 and Manner 3, after the sensing responder reports the first indication information by using the first sensing measurement report frame and/or the mobility indication frame in the process of the first sensing measurement exchange, a subsequent sensing measurement exchange procedure may be performed normally. As shown in FIG. 19, after the first sensing measurement exchange, a second sensing measurement exchange may be further included. The sensing responder may send a second sensing measurement report frame to the sensing initiator in a process of the second sensing measurement exchange, where the second sensing measurement report frame includes a second sensing measurement report; and the second sensing measurement exchange is also a sensing measurement exchange included in the process of the sensing measurement, and the first sensing measurement exchange is before the second sensing measurement exchange. For example, the first sensing measurement exchange is a sensing measurement exchange in the process of the sensing measurement, and the second sensing measurement exchange is a sensing measurement exchange after the first sensing measurement exchange in the process of the sensing measurement.

Further, after receiving the first indication information, the sensing initiator may have the following behaviors:
(1) The sensing initiator does not perform any parameter adjustment, and continues the procedure of the sensing measurement after the movement of the sensing responder is completed. For example, the sensing initiator learns that the sensing responder has moved, and continues a subsequent sensing measurement procedure based on original parameters.
(2) The sensing initiator updates a sensing measurement parameter, for example, changes a number of receiver/transmitter streams or a number of receiver/transmitter antennas. For example, the sensing initiator learns that the sensing responder has moved, updates the sensing measurement parameter, and continues a subsequent sensing measurement procedure after the sensing measurement parameter is updated.

In a possible implementation, a parameter may be updated in an NDPA frame or an SR2SI trigger frame, for example, receiver/transmitter power or a receiver/transmitter RU is updated.

(4) The sensing initiator may send a sensing measurement termination frame to a current sensing responder, to notify that a sensing procedure is terminated. For example, the sensing initiator learns that a sensing responder moves, and may send a sensing measurement termination frame to the sensing responder, to notify that a sensing procedure between the sensing initiator and the sensing responder is terminated.

(5) The sensing initiator sends a sensing measurement termination frame to all sensing responders in a sensing measurement session, to notify that the sensing procedure is terminated.

In the communication method shown in FIG. 12, in the process of the sensing measurement, if the sensing responder moves, the sensing initiator may be notified by using the first indication information, so that the sensing initiator can learn of a mobility status of the sensing responder in time in the process of the sensing measurement. A procedure of the sensing measurement is adapted to a device movement scenario.

In addition, in the process of the sensing measurement, if the sensing responder moves, the sensing responder may use the sensing measurement termination frame to notify that the procedure of the sensing measurement is terminated. For example, after determining that the sensing responder moves, the sensing responder sends the sensing measurement termination frame to notify that the sensing procedure is terminated, without notifying the sensing initiator by using the first indication information.

By way of example, and not limitation, in this application, the sensing responder may feed back the first indication information to the sensing initiator based on an indication of the sensing initiator. For example, the sensing measurement request frame in step S1210 includes second indication information, and the second indication information indicates the sensing responder to feed back mobility indication information when the sensing responder moves.

For example, that the sensing measurement request frame includes the second indication information includes at least one of the following:
a sensing measurement parameters field in the sensing measurement request frame includes the second indication information;
a TB sensing specific subelement in the sensing measurement request frame includes the second indication information; or
a non-TB sensing specific subelement in the sensing measurement request frame includes the second indication information.

In a possible implementation, the sensing measurement parameters field in the sensing measurement request frame includes a 1-bit field: a mobility indication request (Mobility indication request) field, where the mobility indication request field is the second indication information, indicating that the sensing responder needs to notify the sensing initiator if the sensing responder moves.

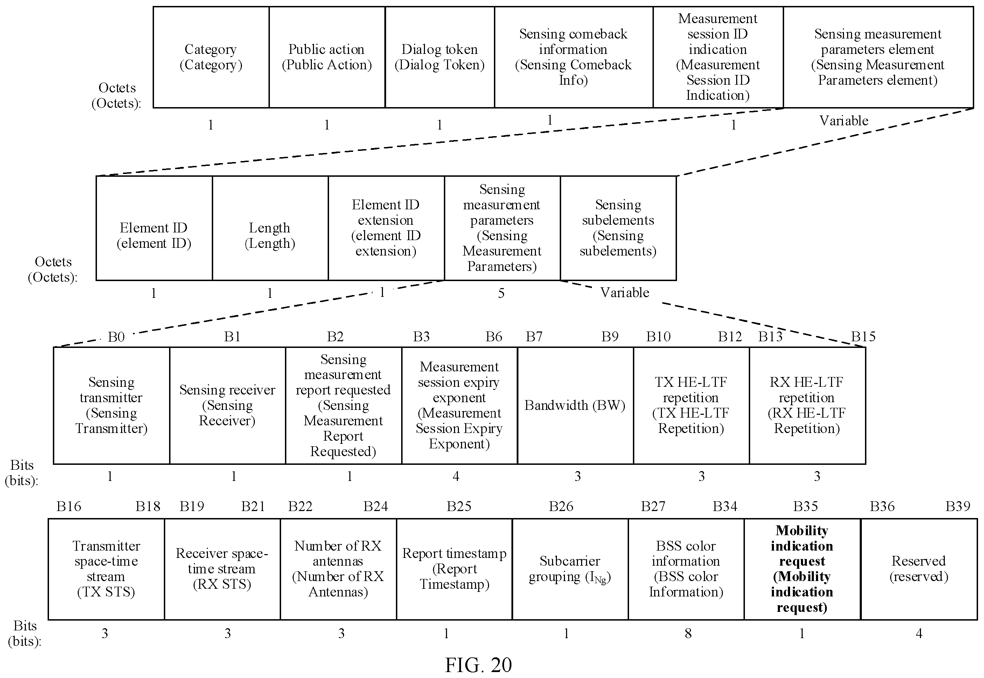

In this implementation, the sensing measurement parameters field in the sensing measurement request frame is shown in FIG. 20. Compared with the sensing measurement parameters field shown in FIG. 4A to FIG. 4C, the sensing measurement parameters field in the sensing measurement request frame includes a 1-bit mobility indication request field

In another possible implementation, the TB sensing specific subelement field in the sensing measurement request frame includes a 1-bit field: a mobility indication request (Mobility indication request) field, where the mobility indication request field is the second indication information, indicating that the sensing responder needs to notify the sensing initiator if the sensing responder moves.

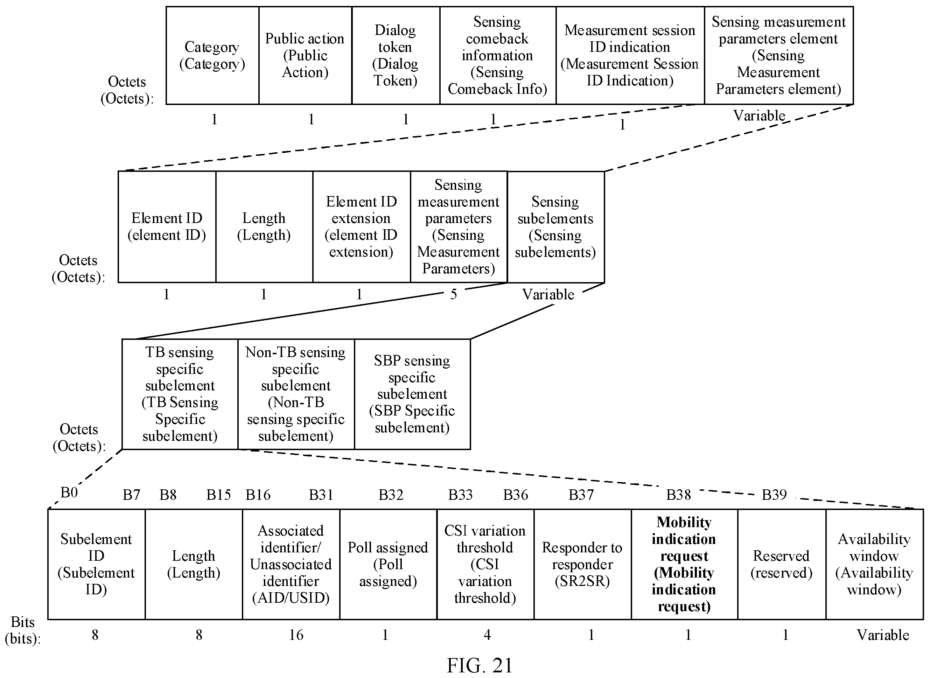

In this implementation, the sensing measurement parameters field in the sensing measurement request frame is shown in FIG. 21. Compared with the TB sensing specific subelement field in the sensing subelements field shown in FIG. 4A to FIG. 4C, the TB sensing specific subelement field in the sensing measurement request frame includes a 1-bit mobility indication request field.

It should be understood that, in this implementation, a frame structure shown in FIG. 21 is suitable for the TB sensing measurement exchange, that is, the AP serves as a sensing initiator, and the device serves as a sensing responder. The AP indicates that the device needs to notify the AP if the device moves.

In still another possible implementation, the non-TB sensing specific subelement field in the sensing measurement request frame includes a 1-bit field: a mobility indication request (Mobility indication request) field, where the mobility indication request field is the second indication information, indicating that the sensing responder needs to notify the sensing initiator if the sensing responder moves.

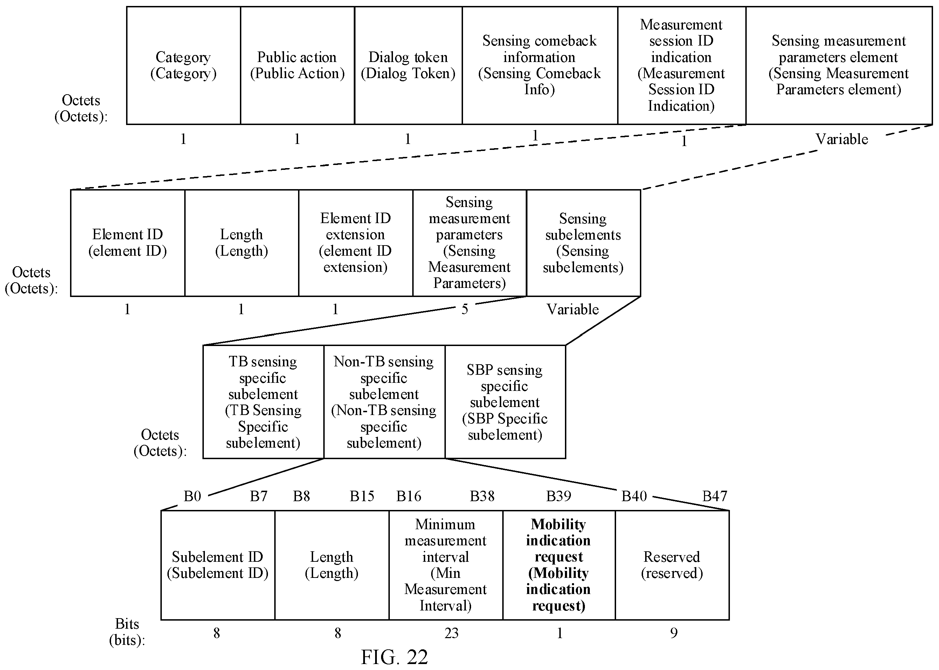

In this implementation, the sensing measurement parameters field in the sensing measurement request frame is shown in FIG. 22. Compared with the non-TB sensing specific subelement field in the sensing subelements field shown in FIG. 4A to FIG. 4C, the non-TB sensing specific subelement field in the sensing measurement request frame includes a 1-bit mobility indication request field.

It should be understood that, in this implementation, a frame structure shown in FIG. 22 is suitable for the non-TB sensing measurement exchange, that is, the device serves as a sensing initiator, and the AP serves as a sensing responder. The device indicates that the AP needs to notify the device if the AP moves.

It should be understood that the foregoing implementations are merely examples for describing how the sensing initiator indicates the sensing responder to feed back mobility indication information when the sensing responder moves, and do not constitute any limitation on the protection scope of this application. The sensing initiator may also indicate, in other manners, the sensing responder to feed back mobility indication information when the sensing responder moves. For example, the second indication information may not be carried in the sensing measurement request frame. Examples are not enumerated herein again.

By way of example, and not limitation, in this application, the sensing responder may feed back the first indication information to the sensing initiator based on an indication of the sensing initiator. For example, the sensing measurement request frame in step S1210 includes indication information #1, and the indication information #1 indicates a subsequent behavior of the sensing responder when the sensing responder moves.

In a possible implementation, the indication information #1 includes at least one of a first field, a second field, and a third field; and the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

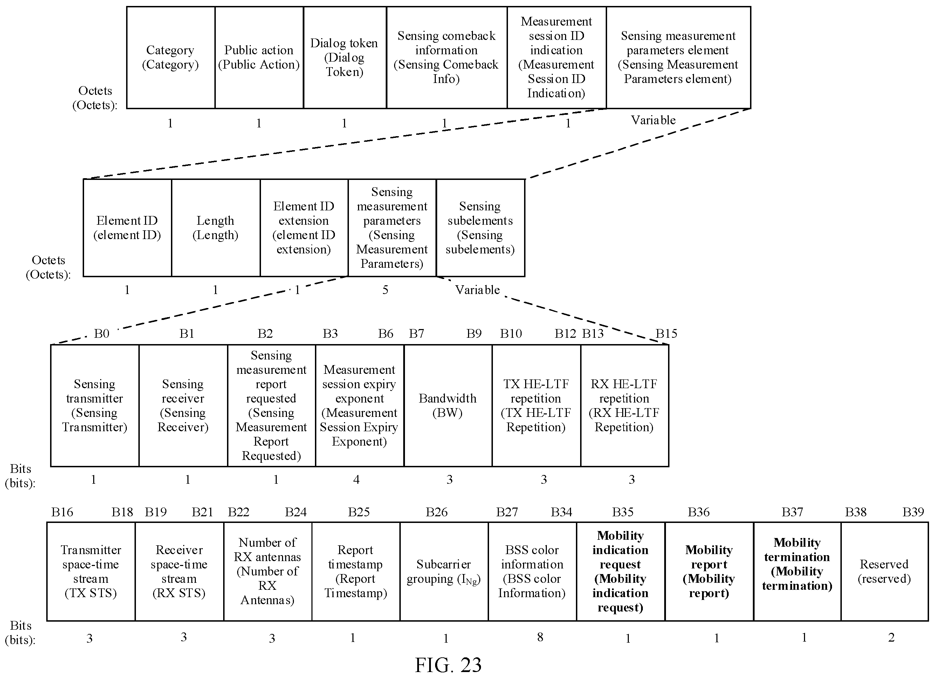

For example, in this implementation, a frame structure of the sensing measurement parameters field is shown in FIG. 23. Compared with the structure of the sensing measurement parameters field shown in FIG. 4A to FIG. 4C, the frame structure of the sensing measurement parameters field includes 3-bit information (for example, a mobility indication request (Mobility indication request) field, a mobility report (Mobility report) field, and a mobility termination (Mobility termination) field shown in FIG. 23). That is, 3 bits of the reserved field in the sensing measurement parameters field shown in FIG. 4A to FIG. 4C are respectively used as a mobility indication request field, a mobility report field, and a mobility termination field to indicate a subsequent behavior of the sensing responder if the sensing responder moves. The mobility indication request field, the mobility report field, and the mobility termination field are the indication information #1.

In a possible implementation, if the mobility indication request field is set to 1, it indicates the sensing responder to feed back mobility indication information when the sensing responder moves; if the mobility report field is set to 1, it indicates the sensing responder to feed back, when the sensing responder moves, a sensing measurement report carrying mobility indication information; and if the mobility termination field is set to 1, it indicates the sensing responder to terminate a measurement session when the sensing responder moves.

It should be understood that many indoor IoT devices may be equipped with an accelerometer to detect movement, a gyroscope to detect a mobility direction, a GPS to detect a change of a geographical location, and an optical sensor to detect movement of the device relative to a surface, and can detect and analyze strength and a source of a surrounding Wi-Fi or Bluetooth signal. Therefore, many devices know whether they have moved and an extent to which they have moved. In the sensing measurement exchange phase, after the sensing responder moves, the sensing responder may feed back more information about the movement of the sensing responder to the sensing initiator, to provide references for the sensing initiator, which helps the sensing initiator design a targeted algorithm. The sensing initiator can monitor and record location changes of these devices, so that these changes can be considered during analysis or subsequent measurement initiation.

Because the device may move actively or passively, the information that can be provided by the sensing responder may include movement time, coordinates of a new location of the device, or displacement information relative to an original location, including a mobility range (mobility range), a mobility direction (mobility direction), and a mobility velocity (mobility velocity). The detailed information is shown in Table 2.

**Table 2**

| **Field (Field)** | **Size (Size (bits))** | **Definition (Definition)** |
|---|---|---|
| Mobility indication (Mobility indication) | 1 | Set to 1 to indicate that movement occurs; set to 0 to indicate that no movement occurs (Set to 1, movement occurs; set to 0, no movement) |
| Mobility timestamp (Mobility timestamp) | 32 | Time that the movement occurred or is about to occur (The time that the movement occurred or is about to occur) |
| Mobility range (Mobility range) | 16 | Range of a station relative to its previous location in units of millimeters (The range of the station relative to its previous location in units of millimeters) |
| Range span (Range span) | 6 | Indicates a range span (size) of the station relative to its previous location, using the following equation: |
| | | Range span=min(round(4log2(*u*)), 63), where the range span is in units of millimeters (The Range Span field indicates the range span (size) of the station relative to its previous location, using the following equation: |
| | | Range Span=min(round(4log2(*u*)), 63) where the Range Span is in units of millimeters) |
| Mobility azimuth (Mobility azimuth) | 11 | Mobility azimuth relative to its previous location in units of (360/2048)^{°} (The mobility azimuth relative to its previous location in units of (360/ 2048)^{°}) |
| Azimuth span (Azimuth span) | 5 | The azimuth span field indicates an azimuth span (size) of a station relative to its previous location, using the following equation: |
| | | Azimuth |
| | | span=min(max(round(3*log2(u*2048/360)), 0), 31), where u is the azimuth span in units of (360/2048)^{°} (The Azimuth Span field indicates the Azimuth span (size) of the station relative to its previous location, using the following equation: |
| | | Azimuth |
| | | Span=min(max(round(3*log2(*u**2048/360)), 0), 31) where *u* is the azimuth span in units of (360/ 2048)^{°}) |
| Mobility elevation (Mobility elevation) | 10 | Mobility elevation relative to its previous location in units of (360/2048)^{°} (The mobility elevation relative to its previous location in units of (360/2048)^{°}) |
| Elevation span (Elevation span) | 5 | The elevation span field indicates an elevation span (size) of a station relative to its previous location, using the following equation: |
| | | Elevation |
| | | span=min(max(round(3*log2(u*2048/360)), 0), 31), where u is the elevation span in units of (360/2048)°. (The Elevation span field indicates the Elevation span (size) of the station relative to its previous location, using the following equation: |
| | | Elevation |
| | | span=min(max(round(3*log2(*u**2048/360)), 0),31) where *u* is the elevation span in units of (360/ 2048)^{°}) |
| Mobility radial velocity (Mobility radial velocity) | 12 | Indicates a mobility radial velocity of a station relative to its previous location in units of 1 mm/s (It indicates the Mobility Radial Velocity of the station relative to its previous location in units of 1 mm/s) |
| Mobility azimuth velocity (Mobility azimuth velocity) | 12 | Indicates a mobility azimuth Velocity of a station relative to its previous location in units of (360/2048)°/s (It indicates the Mobility Azimuth Velocity of the station relative to its previous location in units of (360/2048)°/s) |
| Mobility elevation velocity (Mobility elevation velocity) | 12 | Indicates a mobility elevation velocity of a target relative to a sensing receiver in units of (360/ 2048)^{°}/*s*. It indicates the Mobility Elevation Velocity of the target relative to the sensing receiver in units of (360/2048)^{°}/*s* |

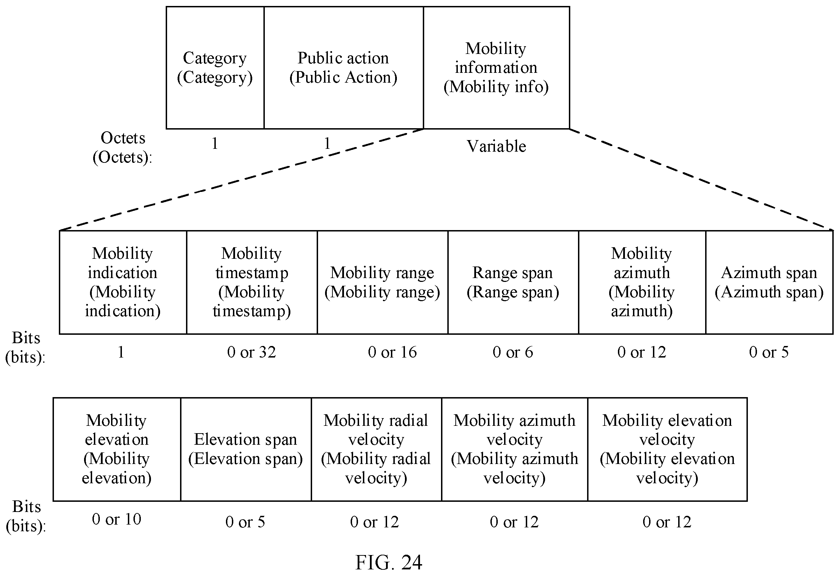

In a possible implementation, the mobility information shown in Table 2 may be carried in the mobility indication frame. For example, a frame structure of the mobility indication frame including the mobility information is shown in FIG. 24. It should be understood that, when the sensing responder reports the mobility information shown in Table 2, the sensing initiator may adjust the sensing measurement parameter based on the received mobility information, to continue to perform sensing measurement.

For example, the sensing responder reports a mobility timestamp, and after receiving the timestamp, the sensing initiator compares the timestamp with the timestamp of the previously received report to accurately know a specific time period that is a device static time period. In this way, CSI data can be classified, which helps an upper layer execute different algorithms and improves accuracy.

For another example, the sensing responder reports information such as a mobility range, a range span, a mobility azimuth, an elevation span, a mobility elevation, or an elevation span, which is equivalent to notifying the sensing initiator of a new location of the sensing responder; or may notify the sensing initiator of a new location of the sensing responder by reporting a coordinate system. For example, a new sensing range may be determined by notifying a new location. For an IoT device, a receiver and a transmitter know respective locations of each other, and perform indoor sensing based on a fixed geometric relationship. If the location changes after the movement, the new location needs to be notified.

For another example, the sensing responder reports three types of velocity information, so that the sensing initiator can learn that the sensing responder is moving continuously at a constant velocity. Therefore, CSI received subsequently is CSI in a movement process. This can be designed for some IoT devices that can actively move, such as a robotic vacuum cleaner.

For another example, the sensing responder may report that the movement needs to be continued subsequently, for example, report a mobility status (Mobility status) field, which may occupy 1 bit (1 bit). The mobility status field is set to 1, indicating that the sensing responder needs to continuously move.

It should be noted that the foregoing descriptions merely describe, by using an example, specific mobility information that may be reported by the sensing responder, and do not constitute any limitation on the protection scope of this application.

For example, in this embodiment, when the sensing responder feeds back the first indication information, an algorithm adjustment capability of the sensing initiator may be considered. For example, the sensing initiator and the sensing responder exchange respective capabilities in the movement scenario in the sensing capabilities exchange phase. The following briefly describes, with reference to FIG. 24, a manner in which the sensing initiator and the sensing responder exchange respective capabilities with each other.

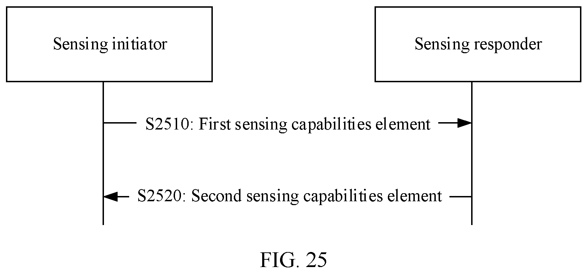

FIG. 25 is a schematic flowchart of a communication method according to an embodiment of this application. The following step is included.

S2510: A sensing initiator sends a first sensing capabilities element to a sensing responder, and correspondingly, the sensing responder receives the first sensing capabilities element from the sensing initiator.

Specifically, the first sensing capabilities element includes third indication information, and the third indication information indicates whether the sensing initiator has a first capability; and the first capability indicates an algorithm adjustment capability of the sensing initiator.

In this embodiment, descriptions are provided by using an example in which the first capability is the algorithm adjustment capability of the sensing initiator in a scenario in which the sensing responder moves. In another scenario, the sensing initiator may also notify the sensing responder of a capability of the sensing initiator by using the third indication information. For example, an environment changes.

For an associated device, the first sensing capabilities element may be carried in a frame like a probe request frame (probe request frame), a probe response frame (probe response frame), an association request frame (association request frame), or an association response frame (association response frame). In other words, for the associated device, the third indication information may be carried in the probe request frame, the probe response frame, the association request frame, or the association response frame. For an unassociated device, the first sensing capabilities element may be carried in a sensing measurement query frame (sensing measurement query frame). In other words, for the unassociated device, the third indication information may be carried in the sensing measurement query frame.

For example, that the first sensing capabilities element includes the third indication information may be that a sensing field in the first sensing capabilities element includes the third indication information.

For example, the sensing field in the first sensing capabilities element includes a 1-bit field: a mobility adjustment (Mobility adjustment) field, where the mobility adjustment field is the third indication information. It may be understood that a reserved field in the sensing field in the current sensing capabilities element indicates whether the sensing initiator has the first capability.

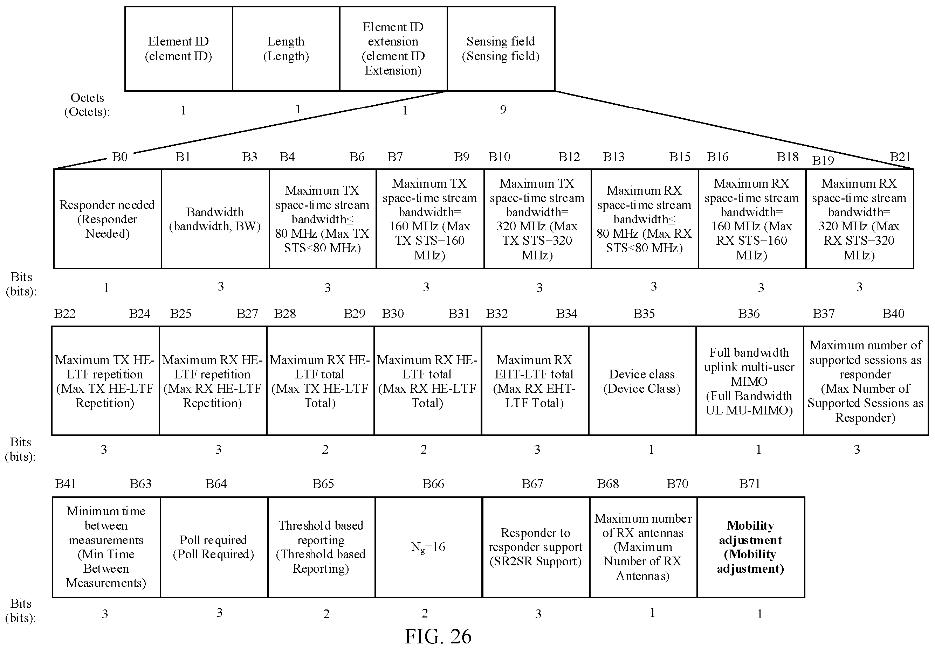

In this implementation, a frame structure of the first sensing capabilities element is shown in FIG. 26. Compared with the frame structure of the sensing capabilities element shown in FIG. 3, the frame structure of the first sensing capabilities element includes a 1-bit mobility adjustment field, that is, a reserved field in the sensing field in the sensing capabilities element shown in FIG. 3 is used as a mobility adjustment field, indicating whether the sensing initiator has a second capability.

It should be noted that sending the third indication information by the sensing initiator to the sensing responder in the sensing capabilities exchange phase is merely an example, and does not constitute any limitation on the protection scope of this application. The sensing initiator may further send the third indication information to the sensing responder in another manner. For example, the sensing initiator may send the third indication information to the sensing responder in a phase of establishing a connection to the sensing responder.

In a possible implementation, the first capability includes any one of the following: a first algorithm adjustment capability, a second algorithm adjustment capability, or a third algorithm adjustment capability; and the first algorithm adjustment capability is stronger than the second algorithm adjustment capability, and the second algorithm adjustment capability is stronger than the third algorithm adjustment capability.

The first algorithm adjustment capability indicates that the sensing initiator can process, when the sensing responder moves, a sensing measurement report fed back by the sensing responder.

For example, the sensing initiator has the first algorithm adjustment capability, indicating that even if the sensing responder moves, the sensing initiator can still effectively process received CSI in an unstable environment.

For another example, the sensing initiator has the first algorithm adjustment capability, indicating that when a channel changes, the sensing initiator can identify whether a channel change is caused by a sensing target or a change is caused by the movement of the sensing responder.

For still another example, the sensing initiator has the first algorithm adjustment capability, indicating that the sensing initiator can execute an advanced sensing algorithm.

The second algorithm adjustment capability indicates that the sensing initiator cannot process, when the sensing responder moves, a sensing measurement report fed back by the sensing responder in the movement process.

For example, the sensing initiator has the second algorithm adjustment capability, indicating that when an environment is unstable due to the movement of the sensing responder, it may be difficult for the sensing initiator to accurately identify whether a channel change is caused by a person or a change is caused by the movement of the sensing responder. Therefore, only CSI fed back by the static sensing responder can be processed.

For another example, the sensing initiator has the second algorithm adjustment capability, indicating that the sensing responder performs a sensing measurement exchange in a static state. If the sensing responder moves, the sensing responder experiences more channel changes based on an original channel when moving from one location to another location. Therefore, in the sensing measurement exchange performed in this case, the sensing initiator may be unable to process concurrent CSI data, resulting in a deteriorated sensing effect. However, if the movement of the sensing responder ends and the sensing responder is in a stable state, the sensing initiator can still process the received CSI.

For still another example, the sensing initiator has the second algorithm adjustment capability, indicating that the sensing initiator executes a common sensing algorithm.

The third algorithm adjustment capability indicates that the sensing initiator cannot process, when the sensing responder moves, a sensing measurement report fed back by the sensing responder.

For example, the sensing initiator has the third algorithm adjustment capability, indicating that if a channel change is caused by the movement of the sensing responder, the sensing initiator cannot identify whether a channel change is caused by a person or a change caused by the movement of the sensing responder, and subsequent sensing measurement cannot be performed.

For another example, the sensing initiator has the third algorithm adjustment capability, indicating that the sensing responder performs a sensing measurement exchange in a static state. If the sensing responder moves, the sensing responder experiences more channel changes based on an original channel when moving from one location to another location. Therefore, in the sensing measurement exchange performed in this case, the sensing initiator may be unable to process concurrent CSI data, resulting in a deteriorated sensing effect. However, if the movement of the sensing responder ends and the sensing responder is in a stable state, the sensing initiator still cannot process the received CSI.

For still another example, the sensing initiator has the third algorithm adjustment capability, indicating that the sensing initiator has a relatively weak algorithm capability.

In a possible implementation, the first algorithm adjustment capability may be referred to as a strong algorithm adjustment capability, the second algorithm adjustment capability may be referred to as a weak algorithm adjustment capability, and the third algorithm adjustment capability may be referred to as no algorithm adjustment capability. If the first capability is the first algorithm adjustment capability, the sensing initiator processes a sensing measurement report based on the received sensing measurement report; if the first capability is the second algorithm adjustment capability, the sensing initiator determines, based on the first indication information, to or not to adjust the algorithm; or if the first capability is the third algorithm adjustment capability, the sensing initiator determines to terminate measurement.

In this embodiment, the sensing responder and the sensing initiator may also exchange respective capabilities with each other. In this case, the method procedure shown in FIG. 25 further includes the following step.

S2520: The sensing responder sends a second sensing capabilities element to the sensing initiator, and correspondingly, the sensing initiator receives the second sensing capabilities element from the sensing responder.

Specifically, the second sensing capabilities element includes fourth indication information, and the fourth indication information indicates whether the sensing responder has a second capability; and the second capability includes a capability of feeding back mobility in a sensing measurement report when the sensing responder moves.

For an associated device, the second sensing capabilities element may be carried in a frame like a probe request frame (probe request frame), a probe response frame (probe response frame), an association request frame (association request frame), or an association response frame (association response frame). In other words, for the associated device, the fourth indication information may be carried in the probe request frame, the probe response frame, the association request frame, or the association response frame. For an unassociated device, the second sensing capabilities element may be carried in a sensing measurement query frame (sensing measurement query frame). In other words, for the unassociated device, the fourth indication information may be carried in the sensing measurement query frame.

For example, that the second sensing capabilities element includes the fourth indication information may be that a sensing field in the second sensing capabilities element includes the fourth indication information.

For example, the sensing field (Sensing field) in the second sensing capabilities element includes a 1-bit field: an invalid report with mobility (Invalid Report with Mobility) field, where the invalid report with mobility field is the fourth indication information. It may be understood that a reserved field in the sensing field in the current sensing capabilities element indicates whether the sensing responder has the second capability.

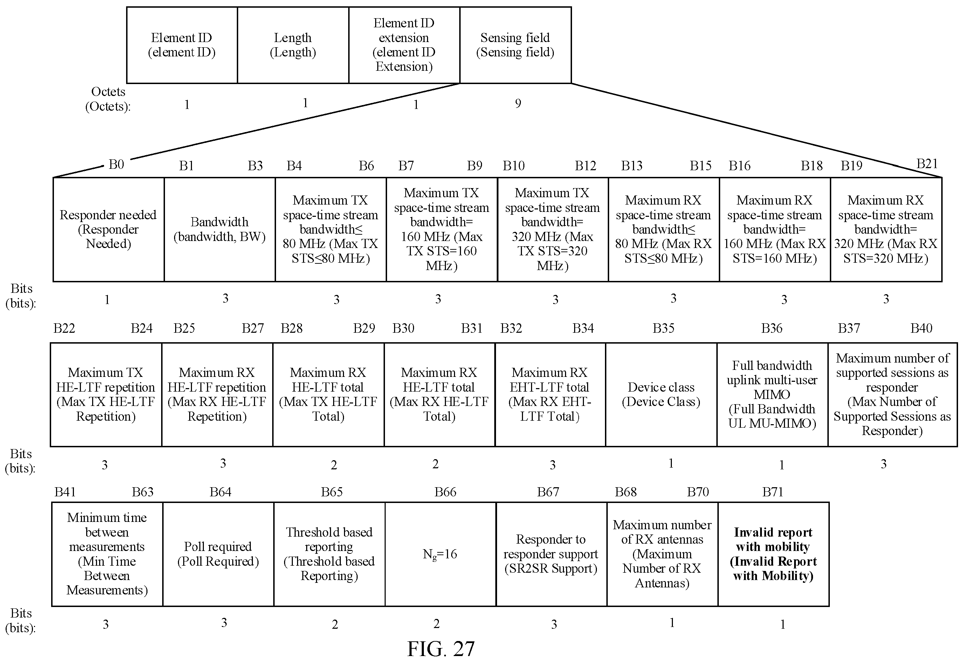

In this implementation, a frame structure of the second sensing capabilities element is shown in FIG. 27. Compared with the frame structure of the sensing capabilities element shown in FIG. 3, the frame structure of the second sensing capabilities element includes a 1-bit invalid report with mobility field, that is, a reserved field in the sensing field in the sensing capabilities element shown in FIG. 3 is used as an invalid report with mobility field, indicating whether the sensing responder has the second capability.

It should be noted that sending the fourth indication information by the sensing responder to the sensing initiator in the sensing capabilities exchange phase is merely an example, and does not constitute any limitation on the protection scope of this application. The sensing responder may further send the fourth indication information to the sensing initiator in another manner. For example, the sensing initiator may send the fourth indication information to the sensing responder in a phase of establishing a connection to the sensing responder.

In a possible implementation, the second capability includes any one of the following:
a capability of not feeding back a sensing measurement report when the sensing responder moves;
a capability of feeding back, when the sensing responder moves, a sensing measurement report carrying mobility indication information; or
a capability of terminating a measurement session when the sensing responder moves.

In this embodiment, if the second capability is the capability of terminating the measurement session during the movement, the sensing responder may directly perform a procedure of terminating the measurement session during the movement, without including, in the second sensing capabilities element, the fourth indication information indicating the second capability.

In the communication method shown in FIG. 25, the sensing responder and the sensing initiator may notify each other of respective capabilities in the sensing measurement capabilities exchange phase. Specifically, the sensing responder notifies the sensing initiator of a capability of feeding back mobility in a sensing measurement report when the sensing responder moves, so that the sensing initiator learns of a capability of the sensing responder in a mobility status. A procedure of the sensing measurement is adapted to a device movement scenario.

By way of example, and not limitation, the methods shown in FIG. 25 and FIG. 12 may be combined. For example, the sensing responder may determine a behavior in a movement scenario based on the algorithm adjustment capability of the sensing initiator, including but not limited to the following manners:

In a possible implementation, if the first capability is the first algorithm adjustment capability, that the sensing responder determines the behavior in the movement scenario based on the first capability includes:
if the sensing responder moves in a process of a first sensing measurement exchange, the sensing responder may send a first sensing measurement report frame to the sensing initiator, where the first sensing measurement report frame includes the first indication information and a first sensing measurement report; or
if the sensing responder moves after a first sensing measurement exchange, the sensing responder may send a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

In another possible implementation, if the first capability is the second algorithm adjustment capability, that the sensing responder determines the behavior in the movement scenario based on the first capability includes:
if the sensing responder moves in a process of a first sensing measurement exchange, the sensing responder may send a first sensing measurement report frame to the sensing initiator, where the first sensing measurement report frame includes the first indication information and does not include a first sensing measurement report; or
if the sensing responder moves after a first sensing measurement exchange, the sensing responder may send a second sensing measurement report frame to the sensing initiator in a process of a second sensing measurement exchange, where the second sensing measurement report frame includes the first indication information and a second sensing measurement report, where
the first sensing measurement exchange is a sensing measurement exchange included in the process of the sensing measurement, the second sensing measurement exchange is a sensing measurement exchange included in the process of the sensing measurement, and the second sensing measurement exchange is a 1^{st} sensing measurement exchange after the first sensing measurement exchange.

In still another possible implementation, if the first capability is the third algorithm adjustment capability, that the sensing responder determines the behavior in the movement scenario based on the first capability includes:
if the sensing responder moves in a process of a first sensing measurement exchange or after the first sensing measurement exchange, the sensing responder may send a sensing measurement termination frame to the sensing initiator after the first sensing measurement exchange, to notify that the sensing measurement is terminated, where the sensing measurement termination frame includes the first indication information; or
if the sensing responder moves in a process of a first sensing measurement exchange or after the first sensing measurement exchange, the sensing responder may send a sensing measurement termination frame to the sensing initiator after the first sensing measurement exchange, to notify that the sensing measurement is terminated.

In addition, when the communication method shown in FIG. 25 is combined with the communication method shown in FIG. 12, the sensing initiator may also indicate, based on a capability of the sensing initiator, a behavior of the sensing responder when the sensing responder moves. For example, it can be learned from the foregoing descriptions that the sensing initiator may indicate, by using at least one of the first field, the second field, and the third field, a behavior of the sensing responder when the sensing responder moves.

In a possible implementation, if the first capability is the first algorithm adjustment capability, that the sensing initiator indicates, by using at least one of the first field, the second field, and the third field, the behavior of the sensing responder when the sensing responder moves includes:
if a sensing measurement report request field in the sensing measurement request frame is set to 1, the first field indicates the sensing responder to feed back, when the sensing responder moves, a sensing measurement report carrying mobility indication information, and the third field indicates the sensing responder to feed back mobility indication information when the sensing responder moves; or
if a sensing measurement report request field in the sensing measurement request frame is set to 0, the first field indicates the sensing responder to or not to feed back, when the sensing responder moves, a sensing measurement report carrying mobility indication information, and the third field indicates the sensing responder to feed back mobility indication information when the sensing responder moves.

In this implementation, based on an indication of the sensing initiator, when the sensing responder moves, the sensing responder may feed back a sensing measurement report carrying mobility indication information, or feed back mobility indication information but does not feed back a sensing measurement report.

In another possible implementation, if the first capability is the second algorithm adjustment capability, that the sensing initiator indicates, by using at least one of the first field, the second field, and the third field, the behavior of the sensing responder when the sensing responder moves includes:
the first field indicates the sensing responder not to feed back, when the sensing responder moves, a sensing measurement report carrying mobility indication information, and the third field indicates the sensing responder to feed back mobility indication information when the sensing responder moves.

In this implementation, based on an indication of the sensing initiator, when the sensing responder moves, the sensing responder may feed back mobility indication information but not feed back a sensing measurement report.

In still another possible implementation, if the first capability is the third algorithm adjustment capability, that the sensing initiator indicates, by using at least one of the first field, the second field, and the third field, the behavior of the sensing responder when the sensing responder moves includes:
the first field indicates the sensing responder not to feed back, when the sensing responder moves, a sensing measurement report carrying mobility indication information, the second field indicates the sensing responder to terminate a measurement session when the sensing responder moves, and the third field indicates the sensing responder to feed back mobility indication information when the sensing responder moves.

In this implementation, based on an indication of the sensing initiator, when the sensing responder moves, the sensing responder may feed back mobility indication information and terminate a measurement session.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the sensing initiator and the sensing responder) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (for example, the sensing initiator and the sensing responder) may also be implemented by a component (for example, a chip or a circuit) of the device.

The foregoing describes, in detail with reference to FIG. 2, the communication method provided in embodiments of this application. The foregoing communication method is mainly described from a perspective of an exchange between a sensing initiator and a sensing responder. It may be understood that to implement the foregoing functions, the sensing initiator and the sensing responder include corresponding hardware structures and/or software modules for performing the functions.

A person skilled in the art may be aware that, in combination with the examples described in embodiments disclosed in this specification, units and algorithm steps can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

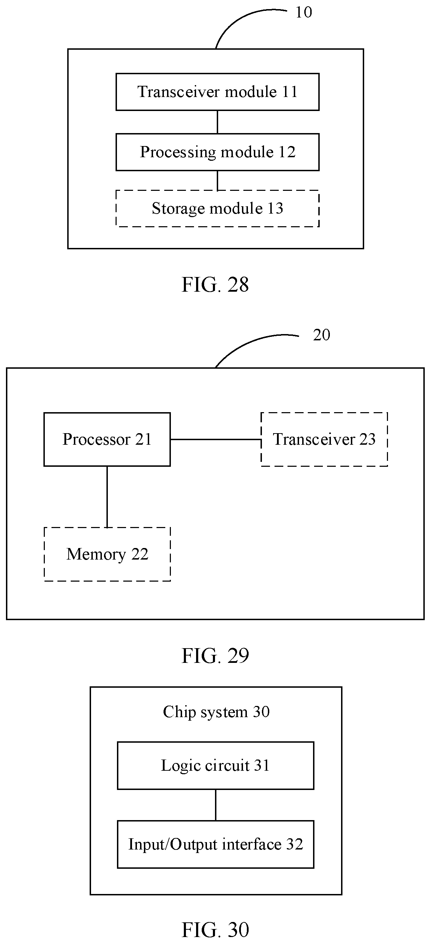

The following describes, in detail with reference to FIG. 28 to FIG. 30, communication apparatuses provided in this application. It should be understood that descriptions of the apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. Descriptions are provided below by using an example in which each functional module is obtained through division based on each corresponding function.

FIG. 28 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform receiving and sending-related operations, and the processing module 12 is configured to perform operations other than receiving and sending. The transceiver module 11 may also be referred to as a communication interface or a communication unit.

In a possible implementation, the apparatus 10 may further include a storage module 13. The storage module 13 may be configured to store instructions and/or data. The processing module 12 may read the instructions and/or the data in the storage module, so that the apparatus implements the actions of the device in the foregoing method embodiments.

In a design, the apparatus 10 may be corresponding to the sensing initiator in the foregoing method embodiment, or may be a component (for example, a chip) of the sensing initiator.

The apparatus 10 may implement corresponding steps or procedures performed by the sensing initiator in the foregoing method embodiments. The transceiver module 11 may be configured to perform receiving and sending-related operations of the sensing initiator in the foregoing method embodiments. The processing module 12 may be configured to perform processing-related operations of the sensing initiator in the foregoing method embodiments.

In a possible implementation, the transceiver module 11 is configured to send a sensing measurement request frame to a sensing responder, where the sensing measurement request frame is used to request to perform sensing measurement; and the transceiver module 11 is further configured to receive first indication information from the sensing responder in a process of the sensing measurement, where the first indication information indicates that the sensing responder moves.

In another possible implementation, the transceiver module 11 is configured to send a first sensing capabilities element to a sensing responder, where the first sensing capabilities element includes third indication information, the third indication information indicates whether the sensing initiator has a first capability, and the first capability indicates an algorithm adjustment capability of the sensing initiator; and the transceiver module 11 is configured to receive a second sensing capabilities element from the sensing responder, where the second sensing capabilities element includes fourth indication information, the fourth indication information indicates whether the sensing responder has a second capability, and the second capability includes a capability of feeding back mobility in a sensing measurement report when the sensing responder moves.

When the apparatus 10 is configured to perform the method in FIG. 12, the transceiver module 11 may be configured to perform steps of receiving and sending information in the method, for example, steps S1210 and S1220; and the processing module 12 may be configured to perform a processing step in the method.

When the apparatus 10 is configured to perform the method in FIG. 25, the transceiver module 11 may be configured to perform steps of receiving and sending information in the method, for example, steps S2510 and S2520; and the processing module 12 may be configured to perform a processing step in the method.

It should be understood that a specific process in which the units perform the foregoing corresponding steps is described in detail in the foregoing method embodiments. For brevity, details are not described herein again.

In another design, the apparatus 10 may correspond to the sensing responder in the foregoing method embodiment, or may be a component (for example, a chip) of the sensing responder.

The apparatus 10 may implement corresponding steps or procedures performed by the sensing responder in the foregoing method embodiments. The transceiver module 11 may be configured to perform receiving and sending-related operations of the sensing responder in the foregoing method embodiments. The processing module 12 may be configured to perform processing-related operations of the sensing responder in the foregoing method embodiments.

In a possible implementation, the transceiver module 11 is configured to receive a sensing measurement request frame from a sensing initiator, where the sensing measurement request frame is used to request to perform sensing measurement; and the transceiver module 11 is configured to send first indication information to the sensing initiator in a process of the sensing measurement, where the first indication information indicates that the sensing responder moves.

In another possible implementation, the transceiver module 11 is configured to receive a first sensing capabilities element from a sensing initiator, where the first sensing capabilities element includes third indication information, the third indication information indicates whether the sensing initiator has a first capability, and the first capability indicates an algorithm adjustment capability of the sensing initiator; and the transceiver module 11 is configured to send a second sensing capabilities element to the sensing initiator, where the second sensing capabilities element includes fourth indication information, the fourth indication information indicates whether the sensing responder has a second capability, and the second capability includes a capability of feeding back mobility in a sensing measurement report when the sensing responder moves.

When the apparatus 10 is configured to perform the method in FIG. 12, the transceiver module 11 may be configured to perform steps of receiving and sending information in the method, for example, steps S1210 and S1220; and the processing module 12 may be configured to perform a processing step in the method.

When the apparatus 10 is configured to perform the method in FIG. 25, the transceiver module 11 may be configured to perform steps of receiving and sending information in the method, for example, steps S2510 and S2520; and the processing module 12 may be configured to perform a processing step in the method.

It should be understood that a specific process in which the units perform the foregoing corresponding steps is described in detail in the foregoing method embodiments. Details are not described herein again.

It should be further understood that the apparatus 10 herein is presented in a form of a functional module. The term "module" herein may be an application-specific integrated circuit (application-specific integrated circuit, ASIC), an electronic circuit, a processor (like a shared processor, a dedicated processor, or a group processor) configured to execute one or more software or firmware programs, a memory, a combinational logic circuit, and/or another proper component that supports the described function. In an optional example, a person skilled in the art may understand that the apparatus 10 may be specifically the sensing responder in the foregoing embodiments, and may be configured to perform procedures and/or steps corresponding to the sensing responder in the foregoing method embodiments; or the apparatus 10 may be specifically the sensing initiator in the foregoing embodiments, and may be configured to perform procedures and/or steps corresponding to the sensing initiator in the foregoing method embodiments. To avoid repetition, details are not described herein again.

The apparatus 10 in the foregoing solutions has a function of implementing corresponding steps performed by the devices (such as the sensing initiator and the sensing responder) in the foregoing methods. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may be a transceiver circuit (for example, may include a receiver circuit and a transmitter circuit), and the processing module may be a processing circuit.

FIG. 29 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the method in the foregoing method embodiments. In a possible implementation, there are one or more processors 21.

In a possible implementation, as shown in FIG. 5, the apparatus 20 further includes a memory 22. The memory 22 is configured to store a computer program or instructions and/or data. The memory 22 and the processor 21 may be integrated together, or may be disposed separately. In a possible implementation, there are one or more memories 22.

In a possible implementation, as shown in FIG. 5, the apparatus 20 further includes a transceiver 23. The transceiver 23 is configured to: receive and/or send a signal. For example, the processor 21 is configured to control the transceiver 23 to receive and/or send a signal.

In a solution, the apparatus 20 is configured to implement the operations performed by the sensing initiator or the sensing responder in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

FIG. 30 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the sensing initiator or the sensing responder in the foregoing method embodiments.

For example, the logic circuit 31 is configured to implement a processing-related operation performed by the sensing initiator or the sensing responder in the foregoing method embodiments; and the input/output interface 32 is configured to implement a sending and/or receiving-related operation performed by the sensing initiator or the sensing responder in the foregoing method embodiments.

An embodiment of this application further provides a computer-readable storage medium. The computer-readable storage medium stores computer instructions for implementing the method performed by the device in the foregoing method embodiments.

For example, when the computer program is executed by a computer, the computer can implement the method performed by the sensing initiator or the sensing responder in the foregoing method embodiments.

An embodiment of this application further provides a computer program product, including instructions. When the instructions are executed by a computer, the method performed by the sensing transmitter or the sensing receiver in the foregoing method embodiments is implemented.

An embodiment of this application further provides a communication system, including the foregoing sensing initiator and sensing responder.

For explanations and beneficial effects of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a sensing initiator, a sensing measurement request frame to a sensing responder, wherein the sensing measurement request frame is used to request to perform sensing measurement; and
receiving, by the sensing initiator, first indication information from the sensing responder in a process of the sensing measurement, wherein the first indication information indicates that the sensing responder moves.

2. The method according to claim 1, wherein receiving, by the sensing initiator, the first indication information from the sensing responder in the process of the sensing measurement comprises:
receiving, by the sensing initiator, a sensing measurement termination frame from the sensing responder after a first sensing measurement exchange, wherein the sensing measurement termination frame comprises the first indication information; and
the first sensing measurement exchange is a sensing measurement exchange comprised in the process of the sensing measurement.

3. The method according to claim 2, wherein the method further comprises:
receiving, by the sensing initiator, a first sensing measurement report frame from the sensing responder in a process of the first sensing measurement exchange, wherein the first sensing measurement report frame comprises a first sensing measurement report.

4. The method according to claim 1, wherein receiving, by the sensing initiator, the first indication information from the sensing responder in the process of the sensing measurement comprises:
receiving, by the sensing initiator, a first sensing measurement report frame from the sensing responder in a process of a first sensing measurement exchange, wherein the first sensing measurement report frame comprises the first indication information; and
the first sensing measurement exchange is a sensing measurement exchange comprised in the process of the sensing measurement.

5. The method according to claim 4, wherein the first sensing measurement report frame does not comprise a measurement report.

6. The method according to claim 1, wherein receiving, by the sensing initiator, the first indication information from the sensing responder in the process of the sensing measurement comprises:
receiving, by the sensing initiator, a first sensing measurement report frame and a mobility indication frame from the sensing responder in a process of a first sensing measurement exchange, wherein the mobility indication frame comprises the first indication information; and
the first sensing measurement exchange is a sensing measurement exchange comprised in the process of the sensing measurement.

7. The method according to any one of claims 4 to 6, wherein the method further comprises:
receiving, by the sensing initiator, a second sensing measurement report frame from the sensing responder in a process of a second sensing measurement exchange, wherein the second sensing measurement report frame comprises a second sensing measurement report; and
the second sensing measurement exchange is a sensing measurement exchange comprised in the process of the sensing measurement, and the first sensing measurement exchange is before the second sensing measurement exchange.

8. The method according to any one of claims 1 to 7, wherein the sensing measurement request frame comprises second indication information, and the second indication information indicates the sensing responder to feed back mobility indication information when the sensing responder moves.

9. The method according to claim 8, wherein that the sensing measurement request frame comprises the second indication information comprises at least one of the following:
a sensing measurement parameters field in the sensing measurement request frame comprises the second indication information;
a TB sensing specific subelement in the sensing measurement request frame comprises the second indication information; or
a non-TB sensing specific subelement in the sensing measurement request frame comprises the second indication information.

10. The method according to any one of claims 1 to 7, wherein the sensing measurement request frame comprises at least one of a first field, a second field, and a third field; and
the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

11. The method according to any one of claims 1 to 10, wherein before the sending, by the sensing initiator, the sensing measurement request frame to the sensing responder, the method further comprises:
sending, by the sensing initiator, a first sensing capabilities element to the sensing responder, wherein the first sensing capabilities element comprises third indication information, and the third indication information indicates whether the sensing initiator has a first capability; and
the first capability indicates an algorithm adjustment capability of the sensing initiator.

12. The method according to claim 11, wherein the first capability comprises at least one of the following:
a first algorithm adjustment capability, a second algorithm adjustment capability, or a third algorithm adjustment capability; and
the first algorithm adjustment capability is stronger than the second algorithm adjustment capability, and the second algorithm adjustment capability is stronger than the third algorithm adjustment capability.

13. The method according to any one of claims 1 to 12, wherein before the sending, by the sensing initiator, the sensing measurement request frame to the sensing responder, the method further comprises:
receiving, by the sensing initiator, a second sensing capabilities element from the sensing responder, wherein the second sensing capabilities element comprises fourth indication information, and the fourth indication information indicates whether the sensing responder has a second capability; and
the second capability comprises a capability of feeding back mobility in a sensing measurement report when the sensing responder moves.

14. The method according to claim 13, wherein the second capability comprises at least one of the following:
a capability of not feeding back a sensing measurement report when the sensing responder moves;
a capability of feeding back, when the sensing responder moves, a sensing measurement report carrying mobility indication information; or
a capability of terminating a measurement session when the sensing responder moves.

15. The method according to any one of claims 1 to 14, wherein the method further comprises:
receiving, by the sensing initiator, at least one of the following information from the sensing responder:
mobility range information of the sensing responder, mobility direction information of the sensing responder, or mobility velocity information of the sensing responder.

16. A communication method, comprising:
receiving, by a sensing responder, a sensing measurement request frame from a sensing initiator, wherein the sensing measurement request frame is used to request to perform sensing measurement; and
sending, by the sensing responder, first indication information to the sensing initiator in a process of the sensing measurement, wherein the first indication information indicates that the sensing responder moves.

17. The method according to claim 16, wherein sending, by the sensing responder, the first indication information to the sensing initiator in the process of the sensing measurement comprises:
sending, by the sensing responder, a sensing measurement termination frame to the sensing initiator after a first sensing measurement exchange, wherein the sensing measurement termination frame comprises the first indication information; and
the first sensing measurement exchange is a sensing measurement exchange comprised in the process of the sensing measurement.

18. The method according to claim 17, wherein the method further comprises:
sending, by the sensing responder, a first sensing measurement report frame to the sensing initiator in a process of the first sensing measurement exchange, wherein the first sensing measurement report frame comprises a first sensing measurement report.

19. The method according to claim 16, wherein sending, by the sensing responder, the first indication information to the sensing initiator in the process of the sensing measurement comprises:
sending, by the sensing responder, a first sensing measurement report frame to the sensing initiator in a process of a first sensing measurement exchange, wherein the first sensing measurement report frame comprises the first indication information; and
the first sensing measurement exchange is a sensing measurement exchange comprised in the process of the sensing measurement.

20. The method according to claim 19, wherein the first sensing measurement report frame does not comprise a measurement report.

21. The method according to claim 16, wherein sending, by the sensing responder, the first indication information to the sensing initiator in the process of the sensing measurement comprises:
sending, by the sensing responder, a first sensing measurement report frame and a mobility indication frame to the sensing initiator in a process of a first sensing measurement exchange, wherein the mobility indication frame comprises the first indication information; and
the first sensing measurement exchange is a sensing measurement exchange comprised in the process of the sensing measurement.

22. The method according to any one of claims 19 to 21, wherein the method further comprises:
sending, by the sensing responder, a second sensing measurement report frame to the sensing initiator in a process of a second sensing measurement exchange, wherein the second sensing measurement report frame comprises a second sensing measurement report; and
the second sensing measurement exchange is a sensing measurement exchange comprised in the process of the sensing measurement, and the first sensing measurement exchange is before the second sensing measurement exchange, or the first sensing measurement exchange is after the second sensing measurement exchange.

23. The method according to any one of claims 16 to 22, wherein the sensing measurement request frame comprises second indication information, and the second indication information indicates the sensing responder to feed back mobility indication information when the sensing responder moves.

24. The method according to claim 23, wherein that the sensing measurement request frame comprises the second indication information comprises at least one of the following:
a sensing measurement parameters field in the sensing measurement request frame comprises the second indication information;
a TB sensing specific subelement in the sensing measurement request frame comprises the second indication information; or
a non-TB sensing specific subelement in the sensing measurement request frame comprises the second indication information.

25. The method according to any one of claims 16 to 22, wherein the sensing measurement request frame comprises at least one of a first field, a second field, and a third field; and
the first field indicates whether the sensing responder feeds back, when the sensing responder moves, a sensing measurement report carrying mobility indication information, the second field indicates whether the sensing responder terminates a measurement session when the sensing responder moves, and the third field indicates whether the sensing responder feeds back mobility indication information when the sensing responder moves.

26. The method according to any one of claims 16 to 25, wherein before the receiving, by the sensing responder, the sensing measurement request frame from the sensing initiator, the method further comprises:
receiving, by the sensing responder, a first sensing capabilities element from the sensing initiator, wherein the first sensing capabilities element comprises third indication information, and the third indication information indicates whether the sensing initiator has a first capability; and
the first capability indicates an algorithm adjustment capability of the sensing initiator.

27. The method according to claim 26, wherein the first capability comprises at least one of the following:
a first algorithm adjustment capability, a second algorithm adjustment capability, or a third algorithm adjustment capability; and
the first algorithm adjustment capability is stronger than the second algorithm adjustment capability, and the second algorithm adjustment capability is stronger than the third algorithm adjustment capability.

28. The method according to claim 27, wherein if the first capability is the first algorithm adjustment capability, before sending, by the sensing responder, the first indication information to the sensing initiator, the method further comprises:
if the sensing responder moves in a process of a first sensing measurement exchange, sending, by the sensing responder, a first sensing measurement report frame to the sensing initiator, wherein the first sensing measurement report frame comprises the first indication information and a first sensing measurement report; or
if the sensing responder moves after a first sensing measurement exchange, sending, by the sensing responder, a second sensing measurement report frame to the sensing initiator in a process of a second sensing measurement exchange, wherein the second sensing measurement report frame comprises the first indication information and a second sensing measurement report, wherein
the first sensing measurement exchange is a sensing measurement exchange comprised in the process of the sensing measurement, the second sensing measurement exchange is a sensing measurement exchange comprised in the process of the sensing measurement, and the second sensing measurement exchange is a 1^{st} sensing measurement exchange after the first sensing measurement exchange.

29. The method according to claim 27, wherein if the first capability is the second algorithm adjustment capability, before sending, by the sensing responder, the first indication information to the sensing initiator, the method further comprises:
if the sensing responder moves in a process of a first sensing measurement exchange, sending, by the sensing responder, a first sensing measurement report frame to the sensing initiator, wherein the first sensing measurement report frame comprises the first indication information and does not comprise a first sensing measurement report; or
if the sensing responder moves after a first sensing measurement exchange, sending, by the sensing responder, a second sensing measurement report frame to the sensing initiator in a process of a second sensing measurement exchange, wherein the second sensing measurement report frame comprises the first indication information and a second sensing measurement report, wherein
the first sensing measurement exchange is a sensing measurement exchange comprised in the process of the sensing measurement, the second sensing measurement exchange is a sensing measurement exchange comprised in the process of the sensing measurement, and the second sensing measurement exchange is a 1^{st} sensing measurement exchange after the first sensing measurement exchange.

30. The method according to claim 27, wherein if the first capability is the third algorithm adjustment capability, before sending, by the sensing responder, the first indication information to the sensing initiator, the method further comprises:
if the sensing responder moves in a process of a first sensing measurement exchange or after the first sensing measurement exchange, sending, by the sensing responder, a first sensing measurement report frame and a sensing measurement termination frame to the sensing initiator, wherein the sensing measurement termination frame comprises the first indication information.

31. The method according to any one of claims 16 to 30, wherein before the receiving, by the sensing responder, the sensing measurement request frame from the sensing initiator, the method further comprises:
sending, by the sensing responder, a second sensing capabilities element to the sensing initiator, wherein the second sensing capabilities element comprises fourth indication information, and the fourth indication information indicates whether the sensing responder has a second capability; and
the second capability comprises a capability of feeding back mobility in a sensing measurement report when the sensing responder moves.

32. The method according to claim 31, wherein the second capability comprises at least one of the following:
a capability of not feeding back a sensing measurement report when the sensing responder moves;
a capability of feeding back, when the sensing responder moves, a sensing measurement report carrying mobility indication information; or
a capability of terminating a measurement session when the sensing responder moves.

33. The method according to any one of claims 16 to 32, wherein the method further comprises:
sending, by the sensing responder, at least one of the following information to the sensing initiator:
mobility range information of the sensing responder, mobility direction information of the sensing responder, or mobility velocity information of the sensing responder.

34. A communication apparatus, wherein the apparatus comprises a unit configured to perform the method according to any one of claims 1 to 15.

35. A communication apparatus, wherein the apparatus comprises a unit configured to perform the method according to any one of claims 16 to 33.

36. A communication system, comprising the communication apparatus according to claim 34 and the communication apparatus according to claim 35.

37. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 33.

38. A computer-readable storage medium, wherein the computer-readable storage medium stores a computer program or instructions, and when the computer program or the instructions are run on a computer, the computer is enabled to perform the method according to any one of claims 1 to 33.

39. A chip or a chip system, comprising a processor, configured to: invoke a computer program from a memory and run the computer program, to enable a communication device on which the chip system is installed to perform the method according to any one of claims 1 to 33.

40. A computer program product, wherein when the computer program product runs on a computer, the computer is enabled to perform the method according to any one of claims 1 to 33.
